(19) Europäisches Patentamt
European Patent Office
Office européen des brevets

(11) EP 3 023 467 B1

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(51) Int Cl.:
***C09D 183/10*** *(2006.01)* ***C09D 183/12*** *(2006.01)*

(21) Anmeldenummer: **14194191.4**

(22) Anmeldetag: **20.11.2014**

(54) **FORMMASSE, THERMOPLAST ODER BESCHICHTUNGSMITTEL ENTHALTEND POLYSILOXANE ALS ANTI-ADHÄSIVE UND SCHMUTZABWEISENDE ZUSÄTZE**

MOLDED PRODUCT, THERMOPLAST OR COATING CONTAINING POLYSILOXANES AS ANTI-ADHESIVE AND DIRT-REPELLANT ADDITIVES

OBJET MOULÉ, MATIÈRE THERMOPLASTIQUE OU REVÊTEMENT CONTENANT DES POLYSILOXANES EN TANT QU'ANTI-ADHÉSIFS ET ADDITIFS REJETANT LA SALETÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.05.2016 Patentblatt 2016/21**

(73) Patentinhaber: **BYK-Chemie GmbH**
**46483 Wesel (DE)**

(72) Erfinder:
- **JAUNKY, Wojciech**
  **46485 Wesel (DE)**
- **GRIESEL, Wolfgang**
  **46499 Hamminkeln (DE)**

(74) Vertreter: **Leifert & Steffan**
**Patentanwälte**
**Postfach 10 40 09**
**40031 Düsseldorf (DE)**

(56) Entgegenhaltungen:
**EP-A1- 2 226 361**
**EP-A1- 2 716 685**
**WO-A1-2008/041459**
**US-A- 5 082 891**
**US-A- 5 169 919**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine Zusammensetzung, welche gewählt ist aus der Gruppe bestehend aus einer polymeren Formmasse, einem Thermoplasten und einem Beschichtungsmittel, wobei die Zusammensetzung eine oder mehr epoxyfunktionelle Polysiloxane enthält, die sich durch die Addition monovinylfunktioneller Polysiloxane und monovinylfunktioneller Epoxyverbindungen an Alkyl-Wasserstoff-Polysiloxane herstellen lassen. Die Zusammensetzung wird in diesen Beschichtungsmittelzusammensetzungen, polymeren Formmassen oder Thermoplasten, beispielsweise als Oberflächenmodifizierungsmittel, wie beispielsweise als Fluss- und Verlaufmittel, Gleitmittel, Mittel zur Verbesserung der Kratzbeständigkeit, Hydrophobierungsmittel und Mittel zur Verbesserung der Reinigungseigenschaften des additivierten Materials verwendet.

Es ist bekannt silikonhaltige Verbindungen zu Beschichtungsstoffen und polymeren Formmassen oder Thermoplasten hinzuzufügen (Lackadditive von Johan Bieleman, Weinheim; New York; Chichester; Brisbane; Singapore; Toronto: Wiley-VCH, 1998), um beispielsweise Eigenschaften des Substrats, wie die Benetzung, den Verlauf und die Gleiteigenschaften der Beschichtungsoberflächen zu verbessern oder zu erhalten.

Verschiedenste Polysiloxane werden in einer Vielzahl technischer Bereiche zu unterschiedlichsten Zwecken eingesetzt.. Es ist beispielsweise bekannt, Beschichtungsmitteln, polymeren Formmassen oder Thermoplasten kammartige Polysiloxane zuzusetzen, um bestimmte Eigenschaften zu erzielen, beispielsweise eine verbesserte Kratzbeständigkeit oder um eine leicht zu reinigende Oberflächen zu erhalten.

So beschreibt die EP 1193303 B1 Beschichtungen mit anti-adhäsiven, schmutzabweisenden Eigenschaften, die aus Beschichtungsmitteln erhalten werden, denen als Additiv 0,1 bis 10 Gew.-% bezogen auf den Feststoffgehalt des Beschichtungsmittels eines Polymers zugesetzt werden, welches ein Gewichtsmittel des Molekulargewichts von 2000 bis 200000 besitzt und das aus einem polymeren Basismolekül sowie über Si-C-Bindungen kovalent an das Basismolekül gebundenen Polydiorganosiloxanseitenketten besteht, wobei die Seitenketten ein Gewichtsmittel des Molekulargewichts zwischen 1000 und 30000 aufweisen und deren Anteil am Gesamtgewicht des verzweigten Polymers 5 bis 25 Gew.-% beträgt.

In US 2013/0289134 werden Kammcopolymere auf Basis eines Epoxy-Amin-Rückgrats beschrieben, an welches Polysiloxanketten angepfropft sind. Die daraus hergestellten Beschichtungen weisen reinigungsfreundliche Oberflächen ("easy-toclean") auf.

Epoxy-funktionelle Polysiloxane und Verfahren zu deren Herstellung werden in US 5,512,640 beschrieben. Deren Verwendung zur Modifizierung von Harzzusammensetzungen und Verbundstoffen ist ebenfalls bekannt. So beschreibt beispielsweise die US 6,342,303 B1 epoxy-funktionelle Polysiloxane zur Modifizierung phenolischer Harze, zwecks Verbesserung der interlaminaren Scherfestigkeit nach Temperatur- und Feuchtigkeitsbelastung.

Die Verbesserung der Bruchzähigkeit von duroplastischen Harzen wie Epoxyharzen wurde beispielsweise im Iranian Polymer Journal 19 (3) 2010, Seiten 185 bis 196 beschrieben. Durch die Verwendung polyether-modifizierter Polysiloxane wird eine Verbesserung der Bruchzähigkeit, Schlagzähigkeit und der Delaminierungresistenz der Verbundwerkstoffe erreicht. Durch die Modifikation des Polysiloxans mit Polyetherketten wird die Kompatibiliät mit Epoxysystemen erhöht.

Die Aufgabe der vorliegenden Erfindung bestand in der Verbesserung der Oberflächeneigenschaften von gehärteten Beschichtungsmitteln, polymeren Formmassen oder Thermoplasten. Insbesondere bestand die Aufgabe darin, Beschichtungsmittel, polymere Formmassen oder Thermoplasten, bereitzustellen, die eine verbesserte anti-adhäsive und/oder schmutzabweisende Wirkung zeigen. Weiterhin sollen die zur Vermittlung dieser verbesserten Eigenschaften zugesetzten Additive die anderen Eigenschaften der Beschichtungsmittel, polymeren Formmassen oder Thermoplasten, möglichst nicht beeinträchtigen. Die zugesetzten Additive sollen außerdem in relativ geringen Mengen ihre Wirksamkeit entfalten können. Die Beschichtungsmittel, polymeren Formmassen oder Thermoplasten, sollen ihre anti-adhäsive und/oder schmutzabweisende Wirkung weiterhin über einen langen Zeitraum, beispielsweise von bis zu mehreren Jahren, nahezu beibehalten. Dies sollte auch die Permanenz des anti-adhäsiven und/oder schmutzabweisenden Effektes über mehrere Reinigungszyklen hinweg mit einschließen.

Überraschenderweise hat sich gezeigt, dass die oben beschriebenen Aufgaben durch Polysiloxane, die sich durch die Addition mindestens eines monovinylfunktionellen Polysiloxans und mindestens einer epoxyfunktionellen, monovinylfunktionellen Komponente an ein Si-H-funktionelles Polysiloxan herstellen lassen, gelöst werden. Diese Polysiloxane weisen üblicherweise keine Si-H-Gruppen mehr auf. Sie sind vorzugsweise kammförmig aufgebaut. Die erfindungsgemäßen Beschichtungsmittel, polymere Formmassen oder Thermoplasten, denen diese Additionsprodukte zugesetzt werden, weisen ausgezeichnete anti-adhäsive und schmutzabweisende Eigenschaften auf. Die Additionsprodukte sind sehr verträglich mit den üblichen Inhaltsstoffen von Beschichtungsmitteln, polymeren Formmassen und Thermoplasten und beeinträchtigen üblicherweise nicht deren andere Eigenschaften. Dabei können die epoxyfunktionellen Polysiloxane den erfindungsgemäßen Beschichtungsmitteln, polymeren Formmassen oder Thermoplasten, in relativ geringen Mengen (Additivmengen) zugesetzt werden und bereits in diesen geringen Mengen ihre Wirkung entfalten. Die physikalischen Eigenschaften der ursprünglichen Beschichtungsmittel, polymeren Formmassen oder Thermoplasten beispielsweise in Bezug auf Korrosionsschutz, Glanzhaltung und Witterungsbeständigkeit werden durch die geringen Konzentrationen des Additivs nicht beeinträchtigt. Beschichtungsmittel, polymere Formmassen oder Thermoplasten, die die Additionsprodukte enthalten, zeigen die gewünschten Eigenschaften in der Regel auch über einen Zeitraum von mehreren Jahren und behalten diese Eigenschaften auch über mehrere Reinigungszyklen hinweg bei.

**Ausgangsverbindungen**

**Si-H-funktionelle Polysiloxane**

Bei den Si-H-funktionellen Polysiloxanen kann es sich um kettenförmige Polysiloxane, cyclische Polysiloxane, verzweigte Polysiloxane oder vernetzte Polysiloxane handeln. Bevorzugt handelt es sich um kettenförmige oder verzweigte Polysiloxane. Besonders bevorzugt handelt es sich um kettenförmige Polysiloxane. Beim Si-H-funktionellen Polysiloxan handelt es sich besonders bevorzugt um ein Alkyl-, Aryl- oder Aralkyl-Wasserstoff-Polysiloxan. Ganz besonders bevorzugt handelt es sich um ein Alkyl-Wasserstoff-Polysiloxan, welches als Alkyl-Gruppen $C_1$-$C_{14}$-Alkylgruppen, vorzugsweise $C_1$-$C_4$-Alkylgruppen und ganz besonders bevorzugt Methylgruppen tragen. Die Alkylgruppen können zusätzliche Arylgruppen tragen (man spricht dann von aralkylgruppentragenden Polysiloxanen). Liegen Aralkylgruppen im Polysiloxan vor, so enthalten diese vorzugsweise 7 bis 14 Kohlenstoffatome. Die Polysiloxane können jedoch auch, wenngleich weniger bevorzugt, Arylgruppen tragen. Liegen Arylgruppen im Polysiloxan vor, so enthalten diese vorzugsweise 6 bis 14 Kohlenstoffatome. Auch einsetzbar sind solche Si-H-funktionellen Polysiloxane, die sowohl Alkylgruppen als auch Arylgruppen und/oder Aralkylgruppen tragen. Ganz bevorzugt handelt es sich bei dem Si-H-funktionellen Polysiloxan um ein Methyl-Wasserstoff-Polysiloxan.

**Monovinylfunktionelle Polysiloxane**

An die vorgenannten Si-H-funktionellen Polysiloxane lässt sich beispielsweise durch Additionsreaktion, insbesondere Hydrosilylierungsreaktion, ein monovinylfunktionelles Polysiloxan addieren. Der Begriff "monovinylisch" umfasst im Rahmen dieser Anmeldung alle Spezies, das heißt Verbindungen und polymere Spezies, die genau eine Kohlenstoff-Kohlenstoff-Doppelbindung aufweisen, wobei diese endständig ist. Die monovinylfunktionellen Polysiloxane lassen sich daher vorzugsweise durch folgende Strukturformel (I) wiedergeben:

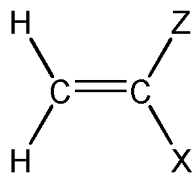

(I)

worin Z für Wasserstoff oder eine Alkylgruppe mit 1 bis 4, vorzugsweise 1 oder 2 Kohlenstoffatomen und X für einen einbindigen Rest der folgenden Formel steht:

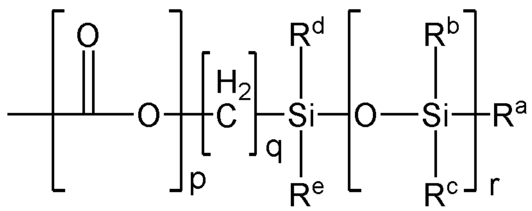

worin p = 0 oder 1, q = 0 bis 30 und r = 1 bis 400, vorzugsweise 5 bis 200, besonders bevorzugt 10 bis 140 und ganz besonders bevorzugt 10 bis 80,
ist und sofern p = 1 ist q ≥ 2, vorzugsweise q ≥ 3 ist,
$R^a$ für einen linearen halogenierten oder nicht halogenierten Alkylrest mit 1 bis 30 Kohlenstoffatomen, einen verzweigten oder zyklischen, halogenierten oder nicht halogenierten Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen oder einen Alkoxyalkylenoxidalkylrest oder Alkoxypolyalkylenoxidalkylrest (wie z.B. $CH_3(OCH_2CH_2)_nO(CH_2)_3$ mit n=1 bis 10) steht,
alle $R^b$, $R^c$, $R^d$ und $R^e$ unabhängig voneinander für einen linearen halogenierten oder nicht halogenierten Alkylrest mit 1 bis 30 Kohlenstoffatomen, einen verzweigten oder zyklischen, halogenierten oder nicht halogenierten Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen stehen,
$R^d$ und $R^e$ zudem unabhängig voneinander für $R^a[SiR^bR^cO]_r$ stehen können, worin $R^a$, $R^b$, $R^c$ und r wie oben definiert sind und unabhängig davon ausgewählt sind.

Steht beispielsweise Z für Wasserstoff, p für 0 und q für 1, so spricht man von Allylpolysiloxanen, steht beispielsweise Z für $CH_3$, p für 1 und q für 3, so bezeichnet dies ein 3-(Methacryloxy)propyl-Polysiloxan.
Im Rahmen der Erfindung werden nur streng monovinylfunktionelle Polysiloxane eingesetzt, das heißt solche, die nur eine Vinylgruppe aufweisen. Eine Methode zur Herstellung der monovinylfunktionellen Polysiloxane beinhaltet die lebende Polymerisation von zyklischen Siloxanen, um ein Polymer mit kontrolliertem Molekulargewicht zu erhalten, die Terminierung wird beispielsweise durch Dialkyl(vinyl)chlorsilane erreicht.
Die Synthese linearer monovinylfunktioneller Polysiloxane kann beispielsweise über eine lebende anionische Polymerisation zyklischer Polysiloxane, beispielsweise eines Hexamethylencyclotrisiloxans, erfolgen. Dieses Verfahren ist unter anderem bei T. Suzuki in Polymer, 30 (1989) 333, WO 2009/086079 A2, EP 1 985 645 A2 und US 2013/0041098 A1 beschrieben. Die Reaktion wird beispielhaft anhand des Hexamethylencyclotrisiloxans, in folgendem Reaktionsschema dargestellt:

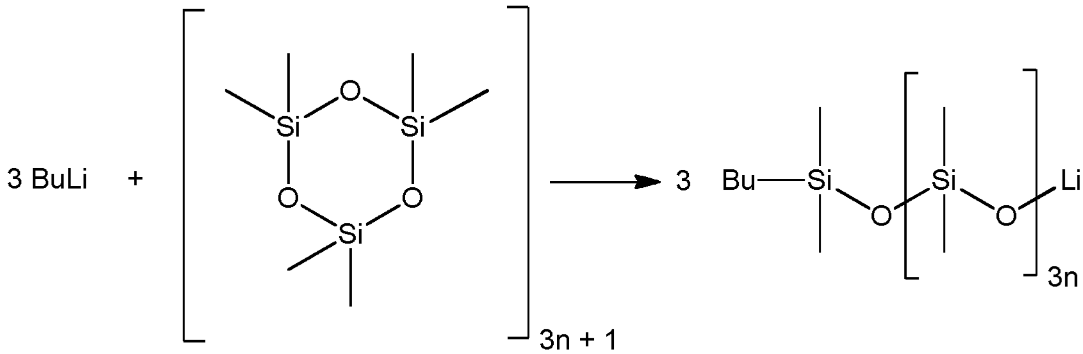

Schema 1

Die Funktionalisierung der Endgruppe kann mit funktionellen Chlorsilanen, beispielsweise Dimethyl(vinyl)chlorsilan, analog dem folgenden Reaktionsschema nach dem Durchschnittsfachmann bekannten Verfahren erfolgen.

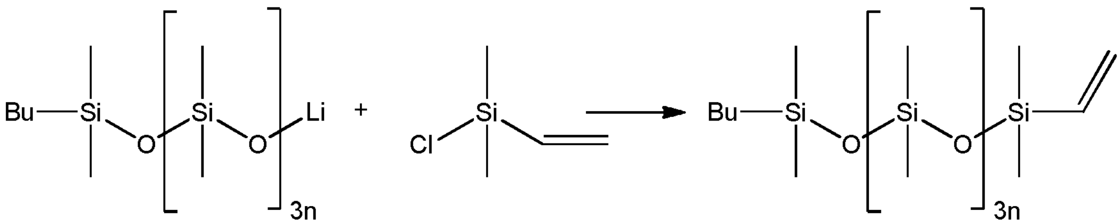

Schema 2

Das nach obigem Schema 2 exemplarisch erhaltene Produkt entspricht einem Produkt nach Formel (I), worin Z = H, p = q = 0, r = 3n+1, $R^b = R^c = R^d = R^e = CH_3$ und $R^a$ = Butyl.
Wenn verzweigte monovinylfunktionelle Polysiloxane gewünscht werden, können Monomethyl(vinyl)dichlorsilan oder Trichlor(vinyl)silan zur Funktionalisierung der Endgruppe eingesetzt werden, wobei für jedes Chloratom ein Polysiloxanrest eingeführt wird.

**Epoxyfunktionelle, monovinylfunktionelle Komponente**

Hierbei handelt es sich um eine von den monovinylfunktionellen Polysiloxanen verschiedene ebenfalls monovinylfunktionelle erfindungswesentliche Komponente, die an die Si-H-funktionellen Polysiloxane addiert wird.

Bei der epoxyfunktionellen, monovinylfunktionellen Komponente kann es sich um Verbindungen handeln, die eine Epoxygruppe und eine Vinylgruppe enthalten. Während derartige Verbindungen eine definierte Struktur besitzen, ist es auch möglich, polymere Spezies einzusetzen. So können zwischen der Epoxygruppe und der Vinylgruppe auch polymere Strukturelemente vorhanden sein, wie beispielsweise Polyalkylenoxy-Gruppen, insbesondere solche aus Ethylenoxid und/oder Propylenoxid.

In der Regel ist die epoxyfunktionelle, monovinylfunktionelle Komponente monoepoxyfunktionell.

Vorzugsweise ist die epoxyfunktionelle, monovinylfunktionelle Komponente aliphatisch.

Bevorzugte epoxyfunktionelle, monovinylfunktionelle Komponenten lassen sich durch folgende Strukturformel (II) wiedergeben:

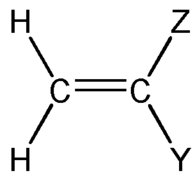

(II)

worin Z für Wasserstoff oder eine Alkylgruppe mit 1 bis 4, vorzugsweise 1 oder 2 Kohlenstoffatomen und Y für einen einbindigen Rest der folgenden Formel steht:

-L-Epoxy

L steht hierin für eine Verbindungsgruppe (auch als Linker bezeichnet) und Epoxy für einen Oxiranring, wobei der Oxiranring mit einem oder beiden Kohlenstoffatomen an den Linker L gebunden ist. Vorzugsweise handelt es sich beim Linker L um einen gesättigten, aliphatischen Rest, der Heteroatome, vorzugsweise Sauerstoffatome enthalten darf. Ganz besonders bevorzugt handelt es sich um einen heteroatomfreien, gesättigten, aliphatischen Kohlenwasserstoffrest. Im Rahmen der vorliegenden Erfindung umfasst der Begriff "aliphatischer Rest" - wie üblich in der chemischen Nomenklatur - acyclische und cyclische aliphatische Reste.

Beispiele für epoxyfunktionelle, monovinylfunktionelle Verbindungen sind 4-Vinylcyclohexenoxid, Allylglycidylether, Methallylglycidylether, 1-Methyl-4-isopropenylcyclohexenoxid, 2,6-Dimethyl-2,3-epoxy-7-octen, 1,4-Dimethyl-4-vinylcyclohexenoxid, Vinylnorbornenmonooxid und Dicyclopentadienmonooxid.

Beispiele für epoxyfunktionelle, monovinylfunktionelle Spezies mit polymeren Strukturelementen sind alpha-Allyl-omega-glycidyloxy-polyethylen-glykol und alpha-Allyl-omega-glycidyloxy-polyethylen/polypropylen-glykol, und dergleichen.

Besonders bevorzugt werden im Rahmen der vorliegenden Erfindung, 4-Vinylcyclohexenoxid und Allylglycidylether eingesetzt.

**Andere in die in der Erfindung verwendeten Polysiloxanen einbaubare Komponenten**

Neben dem zwingend in die Polysiloxane einzubauenden monovinylfunktionellen Polysiloxan und der von diesem verschiedenen epoxyfunktionellen, monovinylfunktionellen Komponente, können noch weitere Bausteine in das Polysiloxan eingebaut werden, die wiederum definitionsgemäß verschieden von den vorgenannten Ausgangsverbindungen sind. Der Einbau weiterer Komponenten dient insbesondere der Feinabstimmung der Verträglichkeit der Polysiloxane mit den Systemen in denen diese eingesetzt werden wie beispielsweise erfindungsgemäße Beschichtungsmitteln, polymeren Formmassen und Thermoplasten.

Diese Bausteine dürfen nach ihrer Reaktion mit dem Si-H-funktionellen Polysiloxan keine gegenüber Epoxygruppen reaktiven funktionellen Gruppen enthalten. Enthalten die Spezies dieser Komponente gegenüber Epoxygruppen reaktive funktionelle Gruppen, so sind diese Spezies mit dem Si-H-funktionellen Polysiloxan unter Verbrauch der mit Epoxygruppen reaktiven Gruppen zeitlich vor den monovinylfunktionellen Komponenten zur Reaktion zu bringen, das heißt bevor eine Hydrosilylierung durch geführt wird.

Vorzugsweise handelt es sich bei den anderen, das heißt fakultativ in die Polysiloxane einbaubaren Komponenten um monovinylfunktionelle Komponenten mit folgender Strukturformel (III):

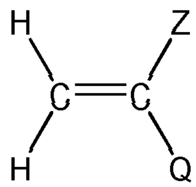

(III)

worin Z für Wasserstoff oder eine Alkylgruppe mit 1 bis 4, vorzugsweise 1 oder 2 Kohlenstoffatomen steht und Q für einen einbindigen Rest der folgenden Formel steht:

$-(L')_v-R$

worin v = 0 oder 1 ist,
L' für eine Verbindungsgruppe steht (auch als Linker bezeichnet) und
R für einen Rest $-SiR^x_nR^y_{3-n}$ steht, worin
n = 1 bis 3 ist,
$R^x$ unabhängig voneinander für Halogen, vorzugsweise Chlor, OAlkyl, vorzugsweise O-$C_{1-4}$-Alkyl, besonders bevorzugt OMethyl oder OEthyl oder für O-CO-Alkyl, vorzugsweise O-CO-$CH_3$ steht, und
$R^y$ für Alkyl, vorzugsweise $C_{1-4}$-Alkyl, besonders bevorzugt für Methyl oder Ethyl steht, oder für Aryl mit 6 bis 10 Kohlenstoffatomen; oder
R für einen polymeren Rest mit Ether-, Ester- und/oder Urethangruppen.

Aus Gründen der Lagerstabilität der Polysiloxane sollte die Gruppe Q vorzugsweise keine gegenüber Epoxygruppen reaktiven Gruppen enthalten, insbesondere keine Hydroxylgruppen enthalten.

Vorzugsweise handelt es sich beim Linker L' um einen gesättigten, aliphatischen Rest oder um einen araliphatischen Rest. Ganz besonders bevorzugt handelt es sich um einen heteroatomfreien, gesättigten, aliphatischen Kohlenwasserstoffrest. Ganz besonders bevorzugt steht L' für einen Alkylenrest mit 1 bis 12 Kohlenstoffatomen oder einen Phenylenalkylen-Rest mit 7 bis 10 Kohlenstoffatomen.

Es können selbstverständlich auch Mischungen der vorgenannten fakultativen Komponenten eingesetzt werden, um die Verträglichkeit der Polysiloxane einer besonders guten Feinabstimmung der Eigenschaften zugänglich zu machen.

Die Silane ($Q = -(L')_v-SiR^x_nR^y_{3-n}$) der obigen Formel weisen eine endständige monovinylische Gruppe auf, beispielsweise eine endständige Alkenylgruppe wie eine Vinylgruppe (Z = H, v = 0) oder Allylgruppe (Z = H, L' = $CH_2$, v=1) oder einen 5-Hexenylrest (Z = H, L' = n-$C_4H_8$, v=1), 7-Octenylrest (Z = H, L' = n-$C_6H_{12}$, v=1) oder eine 10-Undecenylrest (Z = H, L' = n-$C_9H_{18}$, v=1).

Beispielsweise können als Alkoxyalkylsilan oder Alkylchlorsilan Vinyltrichlorsilan, Vinyltri-tert.-butoxysilan, Vinyltriacetoxysilan, Vinylphenylmethylmethoxysilan, Vinylphenylmethylchlorsilan, Vinylphenyldiethoxysilan, Vinyldiphenylchlorsilan, Vinyldimethylethoxysilan, Vinyldimethylchlorsilan, 1-Vinyl-3-(chlormethyl)-1,1,3,3-tetramethyldisiloxan, Vinyl(chlormethyl)dimethylsilan, Vinyldimethylethoxysilan, Vinyltris(methoxypropoxy)silan, Vinyltris(2-methoxyethoxy)silan, Vinyltrimethoxysilan, Vinyltriisopropoxysilan, Vinyltriethoxysilan, Vinylphenyldichlorsilan, Vinyloctyldichlorsilan, Vinylmethyldimethoxysilan, Vinylmethyldiethoxysilan, Vinylmethyldichlorsilan, Vinylmethyldiacetoxysilan, Vinyldiphenylethoxysilan, 5-Hexenyltrichlorsilan, 5-Hexenyldimethylchlorsilan, Docosenyltriethoxysilan, Butenyltriethoxysilan, Butenylmethyldichlorsilan, Allyltrimethoxysilan, Allyltriethoxysilan, Allyltrichlorsilan, Allyloxyundecyltrimethoxysilan, Allylmethyldichlorsilan, Allyldimethylchlorsilan, Allyl(chlormethyl)dimethylsilan, Hexenyltriethoxysilan, Vinyldiphenylethoxysilan, 10-Undecenyltrimethoxysilan, 10-Undecenyltrichlorsilan, 10-Undecenyldimethylchlorsilan, Styrylethyltrimethoxysilan, 7-Octenyltrimethoxysilan, 7-Octenyltrimethoxysilan, 7-Octenyldimethylchlorsilan, etc. verwendet werden.

Besonders bevorzugt handelt es sich beim Rest R um einen polymeren Rest mit Ether-, Ester- und/oder Urethangruppen.

Die polymeren Reste R enthaltenden Verbindungen ($Q = -(L')_v-R$ mit R = polymeren Rest mit Ether-, Ester- und/oder Urethangruppen) der obigen Formel weisen ebenfalls eine endständige monovinylfunktionelle Gruppe auf, beispielsweise eine Allyloxygruppe (Z = H, L' = $CH_2O$, v=1).

Im Falle des Vorhandenseins einer Allyloxygruppe ($CH_2$=CH-$CH_2$-O) und eines Polyether-Rests als Rest R spricht man von Allylpolyethern. Allylpolyether können durch die Alkoxylierung von Allylalkohol oder Monoallylethern mit einer oder mehreren Hydroxygruppen mit Alkylenoxiden, insbesondere Ethylenoxid und/oder Propylenoxid und/oder Butylenoxid und/oder Styroloxid, hergestellt werden.

Es können sowohl Reinalkoxylate als auch Mischalkoxylate hergestellt werden. Bei Mischalkoxylaten kann die Alkoxylierung blockweise, alternierend oder statistisch sein. Auch können die Mischalkoxylate einen Verteilungsgradienten in Bezug auf die Alkoxylierung enthalten.

Vorhandene endständige Hydroxylgruppen werden nach der Synthese blockiert oder verkappt. Dies kann beispielsweise durch Veretherung oder Veresterung oder durch Addition eines Monoisocyanats erfolgen. Vorzugsweise findet eine Methylierung oder Acetylierung statt.

Handelt es sich beim Rest R um einen Polyether-Rest, so ist dies vorzugsweise ein Polyether-Rest aus Ethylenoxid ([EO]), Propylenoxid ([PO]) oder einer Mischung aus Ethylenoxid und Propylenoxid. Es kann in einem solchen Fall durch die folgende Formel wiedergegeben werden:

$$R \qquad = -[EO]_j - [PO]_k - R^T$$

mit j = 0 - 70; bei j = 0 ist k mindestens 1;
mit k = 0 - 50; bei k = 0 ist j mindestens 1;
wobei $R^T$ eine aliphatische, aromatische oder araliphatische, hydroxylgruppenfreie Gruppe darstellt, beispielsweise eine Alkylgruppe, CO-Alkyl-Gruppe oder eine CO-NH-Alkylgruppe. Vorzugsweise enthält die Gruppe $R^T$ 1 bis 10, besonders bevorzugt 1 bis 6 und ganz besonders bevorzugt 1 bis 4 Kohlenstoffatome.

Durch unterschiedliche Anteile an [EO]- und [PO]-Einheiten können die Eigenschaften des Polysiloxans beeinflusst werden. So kann speziell wegen der größeren Hydrophobie der [PO]-Einheiten im Vergleich zu den [EO]-Einheiten durch die Wahl geeigneter [EO]:[PO]-Verhältnisse die Hydrophobie der Polysiloxane gesteuert werden.

Bei den der oben angegebenen Strukturformel entsprechenden Polyether- Copolymeren kann es sich um statistische Copolymere, alternierende Copolymere oder um Blockcopolymere handeln. Auch kann durch die Abfolge der Alkylenoxideinheiten ein Gradient gebildet werden.

Es ist möglich, nicht nur einen Allylpolyether einzusetzen. Zur besseren Steuerung der Verträglichkeit können auch Mischungen unterschiedlicher Allylpolyether eingesetzt werden.

Im Falle des Vorhandenseins einer Allyloxygruppe ($CH_2=CH-CH_2-O$) und eines Polyester-Rests als Rest R spricht man von Allylpolyestern. Allylpolyester können durch die Veresterung von Alkoholen mit allylischer Doppelbindung (1-Alkenolen, wie z.B. 5-Hexen-1-ol, oder hydroxyfunktionelle Allylpolyethern, wie z.B. Ethylenglykolmonoallylether, Diethylglykolmonoallylether oder höhere Homologe) mit Hydroxycarbonsäuren oder deren Lactonen erhalten werden. Bevorzugt erfolgt die Veresterung über eine ringöffnende Polymerisation mit Propiolacton, Caprolacton, Valerolacton und/oder Dodecalacton. Auch können insbesondere methylsubstiuierte Derviate der Lactone eingesetzt werden. Besonders bevorzugt erfolgt die ringöffnende Polymerisation mit Caprolacton. Dabei können sowohl Reinpolyester als auch Mischpolyester hergestellt werden. Bei Mischpolyestern kann die Veresterung blockweise, alternierend oder statistisch sein. Auch können die Mischpolyester einen Verteilungsgradienten in Bezug auf die Veresterung enthalten.

Die Endgruppen des Allylpolyesters werden wie die der Allylpolyether blockiert oder verkappt, beispielsweise durch Acetylierung.

Die gewichtsmittleren Molekulargewichte der Allylpolyester liegen vorzugsweise zwischen 200 und 4000 g/mol, besonders bevorzugt zwischen 300 und 2000 g/mol und ganz besonders bevorzugt zwischen 400 und 1000 g/mol.

Es können auch gemischte Allyl(polyether)(polyester) hergestellt werden, indem beispielsweise an einem hydroxyfunktionellen Allylpolyether eine ringöffnende Lactonpolymerisation durchgeführt wird und anschließend die Hydroxylendgruppe blockiert oder verkappt wird. Selbstverständlich kann auch an einem Allylpolyester mit endständiger Hydroxylgruppe eine Alkoxylierung durchgeführt werden und anschließend eine Blockierung oder Verkappung. Die Kombinationsmöglichkeiten sind hier mannigfaltig.

Generell können die Verträglichkeiten der erfindungsgemäßen Polysiloxane auf unterschiedliche Weise angepasst werden. Um die Polysiloxane beispielsweise in Polyurethane enthaltenden Systeme einzusetzen, kann man in den Polysiloxanen entsprechende Urethangruppenhaltige polymere Reste R einbauen.

Polymere Reste wie beispielsweise Polyether-Reste, Polyester-Reste, Polyurethan-Reste oder polymere Reste, die Ether, Ester und/oder Urethangruppen enthalten können auch durch Kondensationsreaktion in die Si-H-funktionellen Polysiloxane eingebaut werden. Beim Einbau durch Kondensationsreaktion wird üblicherweise von monohydroxyfunktionellen, vorzugsweise linearen, polymeren Komponenten, die Ether, Ester und/oder Urethangruppen aufweisen ausgegangen. Diese können analog den obengenannten Allylpolyethern durch Alkoxylierung von Monoalkoholen beziehungsweise analog den Allylpolyestern durch ringöffnende Polymerisation von Lactonen an Monoalkoholen synthetisiert werden. Als Monoalkohole können beispielsweise Methanol, Ethanol, Butanol oder Allylalkohol, oder andere Starteralkohole, beispielsweise Fettalkohole, dienen.

**Bevorzugte Polysiloxane**

Bevorzugt sind Polysiloxane, die sich mit der folgenden allgemeinen Formel (IV) beschreiben lassen:

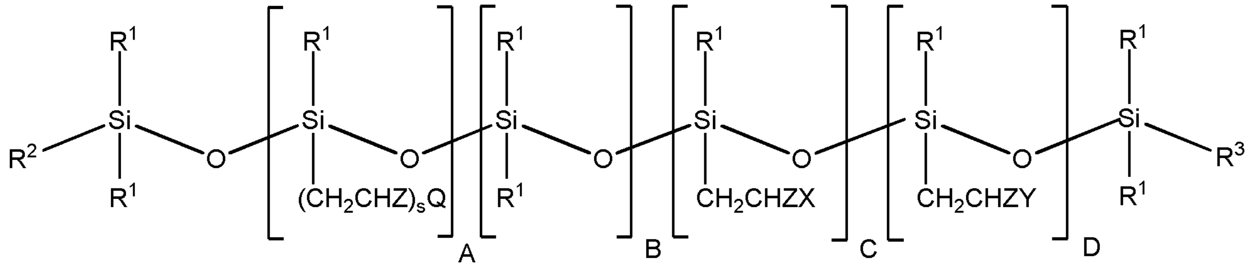

(IV)

wobei

X, Y, Z und Q wie oben definiert sind,
s = 0 oder 1 ist;
$R^1$ unabhängig voneinander für $C_1$-$C_{14}$-Alkyl, $C_6$-$C_{10}$-Aryl oder $C_7$-$C_{12}$-Aralkyl stehen;
$R^2$ und $R^3$ unabhängig voneinander für $CH_2CHZX$, $CH_2CHZY$ oder $(CH_2CHZ)_sQ$, oder für $-(R^4)_i$-$C_1$-$C_{14}$-Alkyl, $-(R^4)_i$-$C_6$-$C_{14}$-Aryl oder $-(R^4)_i$-$C_7$-$C_{14}$-Aralkyl stehen, worin i = 0 oder 1 ist und $R^4$ für O, O-CO, O-CO-O oder $-OSO_2$-steht;
A = 0 - 20, bevorzugt 0 - 15, besonders bevorzugt 0 - 8 ist,
B = 2 - 300, bevorzugt 10 - 200, besonders bevorzugt 15 - 100, ganz besonders bevorzugt 50 bis 100 wie beispielweise 65 bis 100 ist,
C - 0 - 20, bevorzugt 1 - 15, besonders bevorzugt 1 - 8, ganz besonders bevorzugt 1 bis 6 ist; und
D - 0 - 20, bevorzugt 1 - 15, besonders bevorzugt 1 - 8, ganz besonders bevorzugt 3 bis 8 ist;
wobei für C = 0 gilt, dass $R^2$ = X und/oder $R^3$ = X ist, und
wobei für D = 0 gilt, dass $R^2$ = Y und/oder $R^3$ = Y ist.

Wenn die Einheit $-[SiR^1(CH_2CHZX)-O-]-$ vorhanden ist, das heißt C mindestens 1 ist, so ist es möglich, dass $R^2$ und $R^3$ verschieden von $CH_2CHZX$ sind.

Und wenn die Einheit $-[SiR^1(CH_2CHZY)-O-]-$ vorhanden ist, das heißt D mindestens 1 ist, so ist es möglich, dass $R^2$ und $R^3$ verschieden von $CH_2CHZY$ sind.

Bei den der oben angegebenen Strukturformel entsprechenden Copolymeren kann es sich um statistische Copolymere, alternierende Copolymere oder um Blockcopolymere handeln. Auch kann durch die Abfolge der Seitenketten entlang dem Silikonrückgrat ein Gradient gebildet werden. Das heißt, die A Einheiten der Formel $-[SiR^1((CH_2CHZ)_rQ)-O-]-$, die B Einheiten $-Si(R^1)_2-O-$, die C Einheiten $-[SiR^1(CH_2CHZX)-O-]-$ und die D Einheiten $-[SiR^1(CH_2CHZY)-O-]-$ können in der Polysiloxankette in beliebiger Reihenfolge angeordnet sein.

Die bevorzugten Polysiloxane enthalten, wie aus den Definitionen für A, B, C und D gefolgert werden kann, 6 bis 763 Siloxaneinheiten, wobei die Siloxaneinheiten in der Hauptkette und den Seitenketten berücksichtigt werden. Vorzugsweise enthalten die bevorzugten Polysiloxane 10 bis 500 Siloxaneinheiten, noch bevorzugter aus 20 bis 250 Siloxaneinheiten, und ganz besonders bevorzugt aus 50 bis 200 Siloxaneinheiten und insbesondere 100 bis 180 Siloxaneinheiten.

**Verfahren zur Herstellung der Polysiloxane**

Die Reaktionsführung kann so erfolgen, dass mindestens eine epoxyfunktionelle, monovinylfunktionelle Komponente, mindestens ein monovinylfunktionelles Polysiloxan und gegebenenfalls mindestens eine von vorgenannten Spezies verschiedene monovinylfunktionelle Komponente, wie sie oben definiert ist, als Mischung der Komponenten oder in beliebiger Reihenfolge an das Si-H-funktionelle Polysiloxan addiert werden, insbesondere durch Hydrosilylierung.

Als Hydrosilylierungskatalysator werden bevorzugt Edelmetalle deren Verbindungen wie Platin, Rhodium, und Palladium und deren Verbindungen, besonders bevorzugt Platin-Verbindungen eingesetzt. Speziell bevorzugte Platinverbindungen sind Hexachloroplatinsäure, alkoholische Lösungen der Hexachloroplatinsäure, Komplexe mit Platin und aliphatischen ungesättigten Kohlenwasserstoffverbindungen und Platin-Vinylsiloxan-Komplexe. Es kann jedoch auch Platinschwarz und Platin auf Aktivkohle eingesetzt werden. Wenn Beispielhaft eine Platinverbindung eingesetzt wird,

werden vorzugsweise 1 bis 50 ppm als Platinmetall zugesetzt.

Typischerweise erfolgt die Hydrosilylierung unter den folgenden Bedingungen: Das SiH-funktionelle Polysiloxan wird bei Raumtemperatur vorgelegt. Unter einer Stickstoffatmosphäre wird dann der Reaktorinhalt beispielsweise auf 85°C bis 140°C erwärmt. Ein Hydrosilylierungkatalysator, wie z.B. Karstedt-Katalysator oder einer der anderen oben genannten Katalysatoren, wird zugesetzt. Abhängig von der zu erwartenden Exothermie der Reaktion wird ein Teil oder die Gesamtmenge der monovinylfunktionellen Komponenten zugegeben. Durch die dann ablaufende exotherme Reaktion steigt die Temperatur. Normalerweise wird versucht, die Temperatur in einem Bereich von 90°C bis 120°C zu halten. Falls ein Teil der monovinylfunktionellen Komponenten noch zudosiert werden muss, erfolgt die Zugabe in der Art, das die Temperatur im Bereich von 90°C bis 120°C bleibt. Nach vollständiger Zugabe wird die Temperatur noch für einige Zeit bei 90°C bis 120°C gehalten. Der Ablauf der Reaktion kann durch eine gasvolumetrische Bestimmung der verbleibenden SiH-Gruppen oder durch Infrarot-Spektroskopie (Absorptionsbande des Siliciumhydrids bei 2150 $cm^{-1}$) verfolgt werden. Falls erforderlich kann ein alkoholischer Gelierungsinhibitor wie beschrieben in US 5,512,640 zugesetzt werden. Die erfindungsgemäßen Polysiloxane enthalten vorzugsweise keine Si-H-Gruppen.

Werden Komponenten über Kondensationsreaktionen eingeführt, beispielsweise monohydroxyfunktionelle Komponenten durch Kondensation mit einer SiH-Gruppe im SiH-funktionellen Polysiloxan, so werden die Kondensationsreaktionen vor den Hydrosilylierungsreaktionen durchgeführt und das Reaktionswasser wird abgetrennt bevor eine Hydrosilylierung erfolgt.

Die erfindungsgemäßen Polysiloxane können auch als Zwischenstufen zur Herstellung von weiter modifizierten Additiven dienen. So können die erfindungsgemäßen Polysiloxane nachträglich noch komplett oder teilweise chemisch modifiziert werden, um beispielsweise bestimmte neue Reaktivgruppen einzuführen. Durch zumindest teilweise Reaktion der Epoxygruppen, beispielsweise mit Acrylsäure können Produkte erhalten werden, die sich auch in strahlenhärtenden Zusammensetzungen, wie UV- und Elektronenstrahlhärtenden Zusammensetzungen, einsetzen lassen und dabei fest in die entsprechende Zusammensetzung, beispielsweise einen strahlenhärtenden Lack, einbauen lassen.

Die Polysiloxane können beispielweise in Epoxidsystemen, Epoxid-Siloxan-Systemen, Polyestersystemen und auch in Systemen die unter Einwirkung von UV/EB-Strahlung in Gegenwart von schwach sauren Donatoren und anderen vernetzen, verwendet werden.

## <u>Erfindungsgemäße Beschichtungsmittel, polymere Formmassen und Thermoplaste</u>

Gegenstand der Erfindung sind die oben beschriebenen Polysiloxane enthaltende Zusammensetzungen, die aus Beschichtungsmittel, polymeren Formmassen oder Thermoplaste gewählt sind. Besonders bevorzugte erfindungsgemäße Zusammensetzungen sind solche, die Epoxidharze enthalten.

Die erfindungsgemäßen Beschichtungsmittel, polymeren Formmassen oder Thermoplaste können pigmentiert oder unpigmentiert eingesetzt werden, außerdem können die Beschichtungsmittel, polymeren Formmassen und Thermoplaste Füllstoffe wie Calciumcarbonat, Aluminiumhydroxid, verstärkende Fasern wie Glasfasern, C-Fasern und Aramidfasern enthalten. Des Weiteren können sie andere übliche Additive enthalten, wie beispielsweise Netz- und Dispergiermittel, Lichtschutzmittel, Alterungsschutzmittel und dergleichen.

Die erfindungsgemäßen Beschichtungsmittel enthalten bevorzugt mindestens ein weiteres von diesen verschiedenes Bindemittel.

Die erfindungsgemäßen Beschichtungsmittelzusammensetzungen sind vorzugsweise geeignet für Anti-Graffiti-Beschichtungen, Trennbeschichtungen, selbstreinigende Fassadenbeschichtungen, Vereisung verhinderende Beschichtungen, eisabweisenden Beschichtungen, insbesondere für Flugzeuge, schmutzabweisende Beschichtungen für Autokarosserien oder Leichtmetallfelgen, schmutzabweisende Maschinen- und Geräte-Beschichtungen, schmutzabweisende Möbelbeschichtungen oder Schiffsbeschichtungen wie beispielsweise Anti-Fouling-Beschichtungen sowie schmutzabweisenden Möbel- und Trennpapier-Beschichtungen.

Die erfindungsgemäßen Beschichtungsmittel, polymeren Formmassen oder Thermoplasten, enthalten die oben beschriebenen Polysiloxane als Additiv in Mengen von 0,1 bis 10 Gew.-%, bevorzugt von 0,5 bis 7,5 Gew.-%, ganz besonders bevorzugt von 1 bis 5 Gew.-% bezogen auf das Gesamtgewicht des Beschichtungsmittels, der polymeren Formmasse oder des Thermoplasten.

Die erfindungsgemäßen Beschichtungsmittel können auf einer Vielzahl von Substraten aufgebracht werden, wie beispielsweise Holz, Papier, Glas, Keramik, Putz, Beton und Metall. Die Beschichtungen können auch im Mehrschichtverfahren auf Grundierungen, Füller oder Basislacken aufgebracht werden. Die Aushärtung der Beschichtungsmittel ist abhängig von der jeweiligen Art der Vernetzung und kann im weiten Temperaturbereich von beispielsweise -10°C bis 250°C erfolgen. Überraschenderweise zeigen die erfindungsgemäßen Beschichtungsmittel auch bei Aushärtung bei Raumtemperatur sehr gute anti-adhäsive schmutzabweisende Eigenschaften.

Bei den erfindungsgemäßen polymeren Formmassen handelt es sich vorzugsweise um Lackharze, Polyesterharze, Epoxidharze, Silikonharze, Epoxysilikonharze, Polyurethanharze oder Mischungen aus diesen Polymeren.

Aufgrund der außerordentlich guten antiadhäsiven Wirkung der aus den erfindungsgemäßen Beschichtungsmitteln erhaltenen Beschichtungen können selbst ölige Substanzen wie Mineralöle, Pflanzenöle oder ölige Zubereitungen abgewiesen werden, so dass damit beschichtete Behälter vollständig entleerbar sind. Dementsprechend sind erfindungsgemäß additivierte Beschichtungsmittelzusammensetzungen hervorragend als Innenbeschichtungsmittel zur Beschichtung von Fässern, Kanistern oder Dosen geeignet.

Aufgrund der überragenden Kompatibilität der verzweigten, hierin beschriebenen Polyalkoxysiloxane mit verschiedenen Lacksystemen sind diese hervorragend zur Herstellung transparenter Beschichtungen geeignet. Es wird auch hierin ein Verfahren zur Beschichtung eines Substrats gewählt aus den Materialien Metall, Glas, Keramik und Kunststoff beschrieben, wobei eine erfindungsgemäße Beschichtungsmittelzusammensetzung auf das Substrat aufgebracht wird, durch physikalische Trocknung, durch reaktive Selbstvernetzung oder reaktive Fremdvernetzung vernetzt wird. Vorzugsweise erfolgt eine thermische Vernetzung bei einer Temperatur > 100 °C. Weiterer Gegenstand der Erfindung ist die so erhaltene gehärtete Beschichtung. In einer besonderen Ausführungsform der Erfindung erfolgt in der Beschichtung, eine zumindest teilweise hydrolytische Vernetzung, wenn die Polysiloxane hydrolysierbare Silangruppen enthalten, wobei sich an der Beschichtungsoberfläche ein Kieselsäurenetzwerk bildet.

Gehärtete Beschichtungen sind in der Regel duroplastisch und unterscheiden sich daher beispielsweise von thermoplastischen Materialen drastisch.

Durch Anwendung der erfindungsgemäßen Beschichtungsmittel ist es möglich, die Selbstreinigungseigenschaften der Oberflächen merklich zu verbessern. Ein weiterer Vorteil ist, dass andere Eigenschaften derartiger Hybridbeschichtungen, wie beispielsweise der Verlauf, der Glanz, die Transparenz und Flexibilität nicht negativ beeinflusst werden, und teilweise vorgenannte Eigenschaften sogar verbessert werden. Die hierin beschriebenen Polysiloxane als Additive zu Verbesserung der antiadhäsiven Eigenschaften von Beschichtungsmittel, polymeren Formmassen und Thermoplasten verwendet, insbesondere als Additiv zur Ausrüstung von Oberflächen mit schmutzabweisenden und/oder selbstreinigenden Eigenschaften. Das Additiv wird in den oben für Beschichtungsmittel, polymeren Formmassen und Thermoplasten angegebenen Mengen verwendet.

Im Folgenden soll die Erfindung anhand von Beispielen illustriert werden.

## SYNTHESE-BEISPIELE

Gelpermeationschromatographie GPC)

Die Gelpermeationschromatographie wurde bei 40 °C unter Verwendung einer HPLC-Pumpe (Bischoff HPLC 2200) und eines Brechungsindexdetektors (Waters 419) durchgeführt. Als Eluent wurde Tetrahydrofuran verwendet und die Elutionsrate betrug 1 ml/min. Zur Kalibrierung wurden Polystyrenstandards verwendet. Das zahlenmittlere Molekulargewicht $M_n$, das gewichtsmittlere Molekulargewicht $M_w$, das zentrifugenmittlere Molekulargewicht $M_z$ und die Polydispersität (=$M_w/M_n$) wurden unter Verwendung der Software NTeqGPC ermittelt.

Abkürzungen

$M = -O_{0,5}Si(CH_3)_3$
$M^H = -O_{0,5}SiH(CH_3)_2$
$M^{Butyl} = -O_{0,5}Si(Butyl)(CH_3)_2$
$D = -O_{0,5}Si(CH_3)_2O_{0,5}-$
$D^H = -O_{0,5}SiH(CH_3)O_{0,5}-$
$D^{R'} = -O_{0,5}SiR'(CH_3)O_{0,5}-$
$D^{R''} = -O_{0,5}SiR''(CH_3)O_{0,5}-$
$D^{R'''} = -O_{0,5}SiR'''(CH3)O_{0,5}-$
$M^{CH=CH2} = -O_{0,5}Si(CH=CH_2)(CH_3)_2$

**Synthese monovinylfunktioneller Polysiloxane der folgenden Formeln: $M^{Butyl}D_{25}M^{CH=CH2}$, $M^{Butyl}D_{40}M^{CH=CH2}$ und $M^{Butyl}D_{66}M^{CH=CH2}$**

Monovinylterminierte Polydimethylsiloxane besitzen ein durchschnittliches Molekulargewicht von 2000, 3000, 5000 und werden hergestellt analog Beispiel 1 a (1. Stufe) der Patentschrift DE 10 2008 031 901 A1 hergestellt mit dem Unterschied, dass die Endfunktionalisierung mit Chlordimethylvinylsilan anstatt Chlordimethylsilan durchgeführt wurde.

**Beispiel 1**

Umsetzung eines Methyl-Wasserstoff-Polysiloxans mit der mittleren Durchschnittsformel $MD^{H}_{8}D_{91}M$ mit $M^{Butyl}D_{25}M^{CH=CH2}$ und Allylglycidether

In einem 250-ml-3-Halskolben mit Rührer, Thermometer, Rückflusskühler werden bei Raumtemperatur 80,57 g eines Methyl-Wasserstoff-Polysiloxans mit der mittleren Durchschnittsformel $MD^{H}_{8}D_{91}M$ und 37,47 g eines monovinylfunktionellen Polysiloxans mit der Durchschnittsformel $M^{Butyl}D_{25}M^{CH=CH2}$ vorgelegt und unter Stickstoffatmosphäre auf 75°C erwärmt. Bei Erreichen dieser Temperatur werden 0,26 g Karstedt-Katalysator 0,2% in Xylol zugegeben. Durch die bei der Umsetzung frei werdende Wärmemenge erhöht sich die Temperatur auf 103°C. Nach 30 Minuten bei 100°C wird eine gasvolumetrische Bestimmung der verbleibenden Si-H-Gruppen durchgeführt und der theoretische Umsatz von 20 mol% gefunden. Es werden für die 2. Reaktionsstufe 0,03 g Karstedt-Katalysator 0,2% in Xylol zugegeben und anschließend innerhalb 10 min 11,96 Allylglycidylether zudosiert, die Temperatur erhöht sich bis auf 106°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: $MD^{R'}_{x}D^{R''}_{y}D_{91}M$

| | | |
|---|---|---|
| R' = | 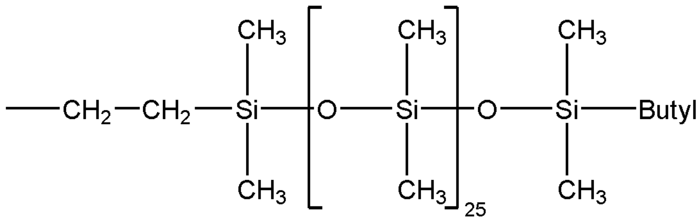 | x= 1,6 |
| R" = | 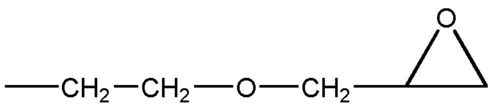 | y = 6,4 |

Es werden folgende GPC-Daten für das Produkt gefunden:

$M_w$: 18124 g/mol, $M_z$: 33679 g/mol, $M_n$: 3299 g/mol, Polydispersität: 5,33

**Beispiel 2**

Umsetzung eines Methyl-Wasserstoff-Polysiloxans mit der mittleren Durchschnittsformel $MD^{H}_{9}D_{76}M$ mit $M^{Butyl}D_{25}M^{CH=CH2}$ und Allylglycidether In einem 250-ml-3-Halskolben mit Rührer, Thermometer, Rückflusskühler werden bei Raumtemperatur 73,49 g eines Methyl-Wasserstoff-Polysiloxans mit der mittleren Durchschnittsformel $MD^{H}_{9}D_{76}M$ und 42,84 g eines monovinylfunktionellen Polysiloxans mit der Durchschnittsformel $M^{Butyl}D_{25}M^{CH=CH2}$ vorgelegt und unter Stickstoffatmosphäre auf 75°C erwärmt. Bei Erreichen dieser Temperatur werden 0,26 g Karstedt-Katalysator 0,2% in Xylol zugegeben. Durch die bei der Umsetzung frei werdende Wärmemenge erhöht sich die Temperatur auf 104°C. Nach 30 Minuten bei 100°C wird eine gasvolumetrische Bestimmung der verbleibenden Si-H-Gruppen durchgeführt und der theoretische Umsatz von 20 mol% gefunden. Es werden für die 2. Reaktionsstufe 0,03 g Karstedt-Katalysator 0,2% in Xylol zugegeben und anschließend innerhalb 10 min 13,67 g Allylglycidylether zudosiert, die Temperatur erhöht sich bis auf 106°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: $MD^{R'}_{x}D^{R''}_{y}D_{76}M$

| | | |
|---|---|---|
| R' = | 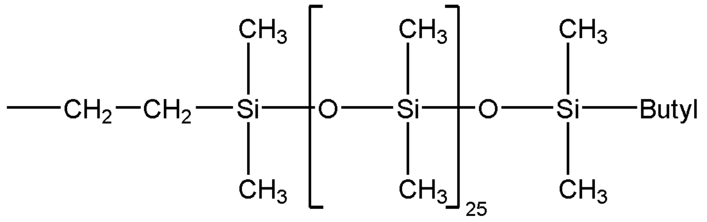 | x= 1,8 |
| R" = | 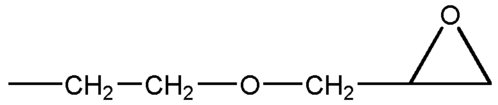 | y = 7,2 |

Es werden folgende GPC-Daten für das Produkt gefunden:

$M_W$: 19210 g/mol, $M_Z$: 37623 g/mol, $M_n$: 3743 g/mol, Polydispersität: 5,13

**Beispiel 3 (Vergleich) (ohne monovinylfunktionelles Polysiloxan)**

Umsetzung eines Methyl-Wasserstoff-Polysiloxans mit der mittleren Durchschnittsformel $MD^{H}_{9,5}D_{153}M$ mit Allylglycidether

In einem 250-ml-3-Halskolben mit Rührer, Thermometer, Rückflusskühler werden bei Raumtemperatur 134,27 g eines Methyl-Wasserstoff-Polysiloxans mit der mittleren Durchschnittsformel $MD^{H}_{9,5}D_{153}M$ unter Stickstoffatmosphäre auf 75°C erwärmt. Bei Erreichen dieser Temperatur werden 0,33 g Karstedt-Katalysator 0,2% in Xylol zugegeben, anschließend innerhalb 10 min 16,73 g Allylglycidylether zudosiert, die Temperatur erhöht sich bis auf 108°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: $MD_{153}D^{R''}_{9,5}M$ mit

| | | |
|---|---|---|
| R" = | 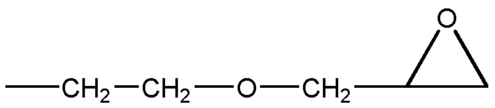 | y= 9,5 |

Es werden folgende GPC-Daten für das Produkt gefunden:

$M_W$: 20683 g/mol, $M_Z$: 37697 g/mol, $M_n$: 2571 g/mol, Polydispersität: 8,04

**Beispiel 4 (Vergleich) (ohne monovinylfunktionelles Polysiloxan)**

Umsetzung eines Methyl-Wasserstoff-Polysiloxans mit der mittleren Durchschnittsformel $MD^{H}_{8}D_{91}M$ mit Allylglycidether

In einem 250-ml-3-Halskolben mit Rührer, Thermometer, Rückflusskühler werden bei Raumtemperatur 127,62 g eines Methyl-Wasserstoff-Polysiloxans mit der mittleren Durchschnittsformel $MD^{H}_{8}D_{91}M$ unter Stickstoffatmosphäre auf 80°C erwärmt. Bei Erreichen dieser Temperatur werden 0,33 g Karstedt-Katalysator 0,2% in Xylol zugegeben, anschließend innerhalb 10 min 22,38 g Allylglycidylether zudosiert, die Temperatur erhöht sich bis auf 105°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: $MD_{91}D^{R''}_{8}M$

| | | |
|---|---|---|
| R'' = | 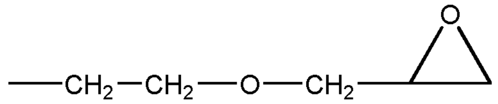 | Y= 8,0 |

Es werden folgende GPC-Daten für das Produkt gefunden:

$M_W$: 13181 g/mol, $M_Z$: 23552 g/mol, $M_n$: 2418 g/mol , Polydispersität: 5,44

**Beispiel 5**

Umsetzung eines Methyl-Wasserstoff-Polysiloxans mit der mittleren Durchschnittsformel $MD^H_8D_{91}M$ mit $M^{Butyl}D_{40}M^{CH=CH2}$ und Allylglycidether

In einem 250-ml-3-Halskolben mit Rührer, Thermometer, Rückflusskühler werden bei Raumtemperatur 88,79 g eines Methyl-Wasserstoff-Polysiloxans mit der mittleren Durchschnittsformel $MD^H_8D_{91}M$ und 47,23 g eines monovinylfunktionellen Polysiloxans mit der Durchschnittsformel $M^{Butyl}D_{40}M^{CH=CH2}$ vorgelegt und unter Stickstoffatmosphäre auf 75°C erwärmt. Bei Erreichen dieser Temperatur werden 0,30 g Karstedt-Katalysator 0,2% in Xylol zugegeben. Durch die bei der Umsetzung frei werdende Wärmemenge erhöht sich die Temperatur auf 103°C. Nach 30 Minuten bei 100°C wird eine gasvolumetrische Bestimmung der verbleibenden Si-H-Gruppen durchgeführt und der theoretische Umsatz von 13,3 mol% gefunden. Es werden für die 2. Reaktionsstufe 0,03 g Karstedt-Katalysator 0,2% in Xylol zugegeben und anschließend innerhalb 10 min 13,98 g Allylglycidylether zudosiert, die Temperatur erhöht sich bis auf 106°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: $MD^{R'}_{x}D^{R''}_{y}D_{91}M$

| | | |
|---|---|---|
| R' = | 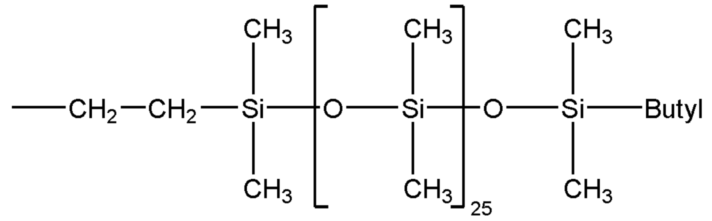 | x= 1,06 |
| R'' = | 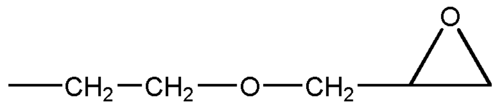 | y= 6,94 |

Es werden folgende GPC-Daten für das Produkt gefunden:

$M_W$: 17064 g/mol, $M_Z$: 31429 g/mol, $M_n$: 3166 g/mol, Polydispersität: 5,39

**Beispiel 6**

Umsetzung eines Methyl-Wasserstoff-Polysiloxans mit der mittleren Durchschnittsformel $MD^H_9D_{76}M$ mit $M^{Butyl}D_{40}M^{CH=CH2}$ und Allylglycidether

In einem 250-ml-3-Halskolben mit Rührer, Thermometer, Rückflusskühler werden bei Raumtemperatur 68,53 g eines Methyl-Wasserstoff-Polysiloxans mit der mittleren Durchschnittsformel $MD^H_9D_{76}M$ und 68,72 g eines monovinylfunktionellen Polysiloxans mit der Durchschnittsformel $M^{Butyl}D_{40}M^{CH=CH2}$ vorgelegt und unter Stickstoffatmosphäre auf 75°C erwärmt. Bei Erreichen dieser Temperatur werden 0,30 g Karstedt-Katalysator 0,2% in Xylol zugegeben. Durch die bei der Umsetzung frei werdende Wärmemenge erhöht sich die Temperatur auf 102°C. Nach 30 Minuten bei 100°C wird eine gasvolumetrische Bestimmung der verbleibenden Si-H-Gruppen durchgeführt und der theoretische Umsatz

von 20 mol% gefunden. Es werden für die 2. Reaktionsstufe 0,03 g Karstedt-Katalysator 0,2% in Xylol zugegeben und anschließend innerhalb 10 min 12,75 g Allylglycidylether zudosiert, die Temperatur erhöht sich bis auf 106°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt

Durchschnittsstruktur: $MD^{R'}_{x}D^{R''}_{y}D_{76}M$

| | | |
|---|---|---|
| R' = | 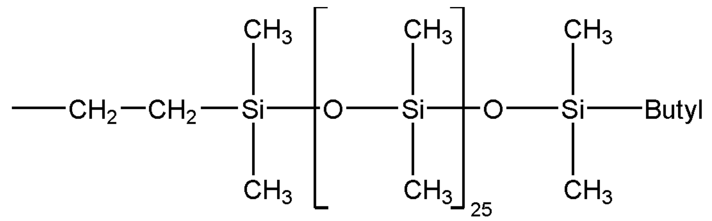 | x= 1,8 |
| R" = | 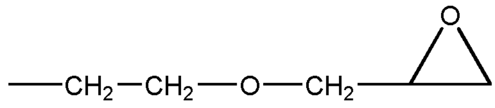 | y= 7,2 |

Es werden folgende GPC-Daten für das Produkt gefunden:

$M_W$: 20259 g/mol, $M_Z$:39641 g/mol, $M_n$:4103 g/mol , Polydispersität: 4,93

**Beispiel 7**

Umsetzung eines Methyl-Wasserstoff-Polysiloxans mit der mittleren Durchschnittsformel $MD^{H}_{8}D_{91}M$ mit $M^{Butyl}D_{66}M^{CH=CH2}$ und Allylglycidether

In einem 250-ml-3-Halskolben mit Rührer, Thermometer, Rückflusskühler werden bei Raumtemperatur 91,73 g eines Methyl-Wasserstoff-Polysiloxans mit der mittleren Durchschnittsformel $MD^{H}_{8}D_{91}M$ und 43,17 g eines monovinylfunktionellen Polysiloxans mit der Durchschnittsformel $M^{Butyl}D_{66}M^{CH=CH2}$ mit 57,98 Xylol vorgelegt und unter Stickstoffatmosphäre auf 75°C erwärmt. Bei Erreichen dieser Temperatur werden 0,30 g Karstedt-Katalysator 0,2% in Xylol zugegeben. Durch die bei der Umsetzung frei werdende Wärmemenge erhöht sich die Temperatur auf 101°C.

Nach 30 Minuten bei 100°C wird eine gasvolumetrische Bestimmung der verbleibenden Si-H-Gruppen durchgeführt und der theoretische Umsatz von 8 mol% gefunden. Bei 100°C und 45 mbar werden mit einem Wasserabscheider innerhalb 20 min 50,1 g Xylol abdestilliert. Das Vakuum wird durch Einleiten von Stickstoff aufgehoben. Es werden für die 2. Reaktionsstufe 0,03 g Karstedt-Katalysator 0,2% in Xylol zugegeben und anschließend innerhalb 10 min 15,1 g Allylglycidylether zudosiert, die Temperatur erhöht sich bis auf 107°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt

Durchschnittsstruktur: $MD^{R'}_{x}D^{R''}yD_{91}M$

| | | |
|---|---|---|
| R' = | 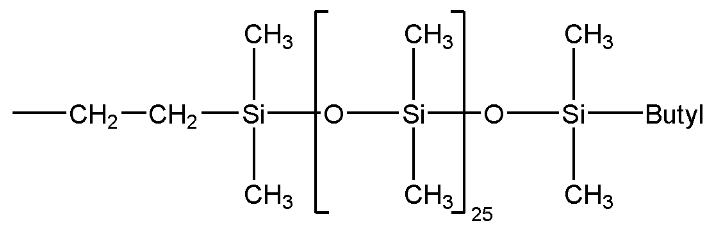 | x= 0,64 |
| R" = | 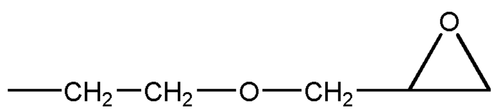 | y =7,36 |

Es werden folgende GPC-Daten für das Produkt gefunden:

$M_W$: 19450 g/mol, $M_n$: 4287 g/mol , Polydispersität: 4,53

## Beispiel 8

Umsetzung eines Methyl-Wasserstoff-Polysiloxans mit der mittleren Durchschnittsformel $MD^H_{24}D_{76}M$ mit $M^{Butyl}D_{40}M^{CH=CH2}$, Allylpolyether mit der Durchschnittsformel $CH_2$=CH-$CH_2O(CH_2$-$CH_2O)_6$-$CH_3$ und Allylglycidether

In einem 250-ml-3-Halskolben mit Rührer, Thermometer, Rückflusskühler werden bei Raumtemperatur 38,17 g eines Methyl-Wasserstoff-Polysiloxans mit der mittleren Durchschnittsformel $MD^H_{24}D_{76}M$ und 55,39 g eines monovinylfunktionellen Polysiloxans mit der Durchschnittsformel $M^{Butyl}D_{40}M^{CH=CH2}$ vorgelegt und unter Stickstoffatmosphäre auf 75°C erwärmt. Bei Erreichen dieser Temperatur werden 0,21 g Karstedt-Katalysator 0,2% in Xylol zugegeben. Durch die bei der Umsetzung frei werdende Wärmemenge erhöht sich die Temperatur auf 100°C. Nach 30 Minuten bei 100°C wird eine gasvolumetrische Bestimmung der verbleibenden Si-H-Gruppen durchgeführt und der theoretische Umsatz von 20 mol% gefunden. Es werden für die 2. Reaktionsstufe 0,17 g Karstedt-Katalysator 0,2% in Xylol sowie 51,93 g Xylol zugegeben und anschließend innerhalb 10 min 27,6 g Allylpolyether mit der Durchschnittsformel $CH_2$=CH-$CH_2O(CH_2$-$CH_2O)_6$-$CH_3$ zudosiert, die Temperatur erhöht sich bis auf 101°C. Nach 60 min Nachreaktion bei 100°C zeigt die gasvolumetrische Bestimmung der verbleibenden Si-H-Gruppen eine weitere Umsetzung von 55 mol%. Es werden für die 3. Reaktionsstufe 0,03 g Karstedt-Katalysator 0,2% in Xylol sowie 3,79 g Xylol zugegeben und anschließend innerhalb 10 min 8,84 g Allylglycidylether zudosiert, die Temperatur erhöht sich bis auf 102°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: $MD^{R'}_xD^{R''}_yD^{R'''}_zD_{76}M$

| | | |
|---|---|---|
| R' = | 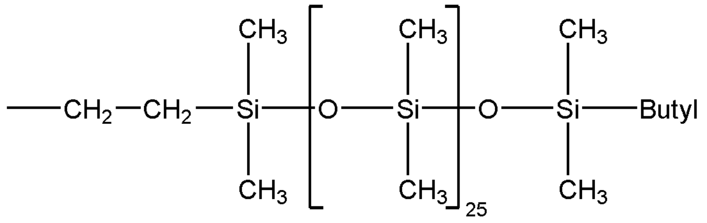 | x= 4,8 |
| R'' = | 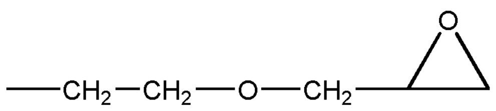 | y = 13,2 |
| R''' = | -$CH_2$-$CH_2$-$CH_2O(CH_2$-$CH_2O)_6$-$CH_3$ | z = 6 |

Es werden folgende GPC-Daten für das Produkt gefunden:

$M_W$: 28041 g/mol, $M_n$: 3335 g/mol , Polydispersität: 8,40

## Beispiel 9

Umsetzung eines Methyl-Wasserstoff-Polysiloxans mit der mittleren Durchschnittsformel $MD^H_9D_{76}M$ mit $M^{Butyl}D_{66}M^{CH=CH2}$, Allylglycidether und Vinyltrimethoxysilan.

In einem 250-ml-3-Halskolben mit Rührer, Thermometer, Rückflußkühler werden bei Raumtemperatur 67,45 g eines Methyl-Wasserstoff-Polysiloxans mit der mittleren Durchschnittsformel $MD^H_9D_{76}M$ und 67,62 g eines monovinylfunktionellen Polysiloxans mit der Durchschnittsformel $M^{Butyl}D_{66}M^{CH=CH2}$ vorgelegt und unter Stickstoffatmosphäre auf 75°C erwärmt. Bei Erreichen dieser Temperatur werden 0,30 g Karstedt-Katalysator 0,2% in Xylol zugegeben. Durch die bei der Umsetzung frei werdende Wärmemenge erhöht sich die Temperatur auf 102°C. Nach 30 Minuten bei 100°C wird eine gasvolumetrische Bestimmung der verbleibenden Si-H-Gruppen durchgeführt und der theoretische Umsatz von 20 mol% gefunden. Es werden für die 2. Reaktionsstufe 0,02 g Karstedt-Katalysator 0,2% in Xylol zugegeben und anschließend innerhalb 5 min 4,56 g Allylglycidylether zudosiert. Die Temperatur erhöht sich bis auf 110°C. Nach 15

min Nachreaktion bei 100°C zeigt die gasvolumetrische Bestimmung der verbleibenden Si-H-Gruppen eine Umsetzung von weiteren 40 mol% Es werden für die 3. Reaktionsstufe 0,01 g Karstedt-Katalysator 0,2% in Xylol sowie zugegeben und anschließend innerhalb 15 min 10,37 g Vinyltrimethoxysilan zudosiert, die Temperatur erhöht sich bis auf 107°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: $MD^{R'}_{x}D^{R''}_{y}D^{R'''}_{z}D_{76}M$

| | | |
|---|---|---|
| R' = | 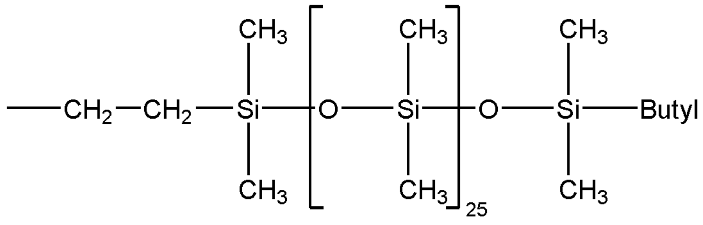 | x= 1,8 |
| R" = | 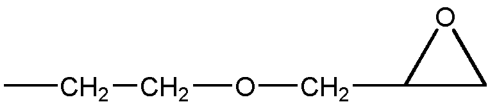 | y = 3,6 |
| R'" = | $-CH_2-CH_2-Si(OCH_3)_3$ | z = 3,6 |

Es werden folgende GPC-Daten für das Produkt gefunden:

$M_W$: 28041 g/mol, $M_Z$: 67596 g/mol, $M_n$: 3335 g/mol, Polydispersität: 8,40

**Vergleichsbeispiel A**

Mono-SiH-funktionelle Polysiloxane werden entsprechend dem beschriebenen Verfahren der Patentschrift DE 102008031901 (Beispiel 1 a) hergestellt.

Synthese von monoaminofunktionellen Polysiloxan

In einem mit Rührer, Thermometer, Tropftrichter, Rückflusskühler und Stickstoffeinleitungsrohr versehenen Vierhalskolben werden mono-SiH-funktionelles Polysiloxan (250 g, Mn ≈ 2000 g/mol) und Karstedt Katalysator (4,38 g, 0,2%ige Anlösung in Xylol) vorgelegt, gut durchmischt und auf 100 °C erhitzt. Allylamin (9,29 g) wird während 30 Minuten zugetropft. Die Umsetzung des mono-SiH-funktionellen Polysiloxans wird mittels gasvolumetrischer Bestimmung verfolgt. Nach vollständiger Umsetzung wird das überschüssige Allylamin abdestilliert. Die gemessene Aminzahl des Produktes beträgt 24,1 mg KOH/g.

Synthese eines Polysiloxan-Gruppen enthaltenden Copolymers

In einem mit Rührer, Thermometer, Tropftrichter, Rückflusskühler und Stickstoffeinleitungsrohr versehenen Vierhalskolben werden das monoaminofunktionelle Polysiloxan aus Beispiel 1 (254,7 g) und 1,6-Hexandiglycidylether (169,6 g) vorgelegt und unter Stickstoff auf 140 °C erhitzt. Nach 2 Stunden Reaktionszeit wird langsam unter Rühren Octylamin (75,6 g) zugetropft. Der Epoxidumsatz wird mittels $^1$H-NMR verfolgt. Nach quantitativem Umsatz der Epoxidgruppe wird die Reaktion abgebrochen.
Das hier erhaltene Produkt besitzt als Polymerrückgrat eine Epoxy-Amin-Struktur und weist Polysiloxanseitenketten auf, die an das Polymermerrückgrat gebunden sind.
Es werden folgende GPC-Daten für das Produkt gefunden:

$M_W$: 9779 g/mol, $M_n$: 3014 g/mol, Polydispersität: 3,24

**Vergleichsbeispiel B**

In einem mit Rührer, Thermometer, Tropftrichter, Rückflusskühler und Stickstoffeinleitungsrohr versehenen Vierhalskolben werden 6,10 g Silaplane FM-0721 (mono-methacrylfunktionelles Polysiloxanmakromer mit einem durchschnittlichen Molekulargewicht von 5,000; Chisso Corporation) und 100 g PMA vorgelegt und gründlich vermischt. Während der gesamten Reaktion wird Stickstoff übergeleitet. Die Temperatur wird auf 135 °C erhöht und es wird innerhalb von 3 Stunden eine Mischung aus 1,21 g MAA, 25,3 g IBMA, 15,4 g HEMA, 17,4 g STY und 0,89 g Trigonox C zudosiert. Nach beendeter Dosierung werden sofort 0,15 g Trigonox C zugegeben. Nach weiteren 30 Minuten und 60 Minuten werden noch mal je 0,15 g Trigonox C zugesetzt. Danach wird der Ansatz noch eine Stunde bei 135 °C gehalten.

Das hier erhaltene Produkt besitzt als Polymerrückgrat ein Poly(meth)acrylatrückgrat und weist entlang des Poly(meth)acrylatrückgrats Hydroxyethylgruppen auf.

Es werden folgende GPC-Daten für das Produkt gefunden:

$M_W$: 14500 g/mol, $M_n$: 3746 g/mol, Polydispersität: 3,87

**Vergleichsbeispiel C**

In einem mit Rührer, Thermometer, Tropftrichter, Rückflusskühler und Stickstoffeinleitungsrohr versehenen Vierhalskolben werden 7,21 g Silaplane FM-0721, und 119 g Propylenglykol-mono-methyletheracetat vorgelegt und gründlich vermischt. Während der gesamten Reaktion wird Stickstoff übergeleitet. Die Temperatur wird auf 135 °C erhöht und es wird innerhalb von 3 Stunden eine Mischung aus 32,24 g Isobutylmethacrylat, 18,76 g Glycidylmethacrylat, 21,14 g Styrol und 1,08 g tert-butyl Peroxybenzoat zudosiert. Nach beendeter Dosierung werden sofort 0,18 g von tert-butyl Peroxybenzoat zugegeben. Nach weiteren 30 Minuten und 60 Minuten werden noch mal je 0,18 g Trigonox C zugesetzt. Danach wird der Ansatz noch eine Stunde bei 135 °C gehalten.

Das hier erhaltene Produkt besitzt als Polymerrückgrat ein Poly(meth)acrylatrückgrat und weist entlang des Poly(meth)acrylatrückgrats Glycidylgruppen auf.

Es werden folgende GPC-Daten für das Produkt gefunden:

$M_W$: 16623 g/mol, $M_n$: 5381 g/mol , Polydispersität: 2,63

**Vergleichsbeispiel D**

In einem mit Rührer, Thermometer, Tropftrichter, Rückflusskühler und Stickstoffeinleitungsrohr versehenen Vierhalskolben werden 7,21 g Silaplane FM-0721 und 119 g Propylenglykol-mono-methyletheracetat vorgelegt und gründlich vermischt. Während der gesamten Reaktion wird Stickstoff übergeleitet. Die Temperatur wird auf 135 °C erhöht und es wird innerhalb von 3 Stunden eine Mischung aus 41,62 g Isobutylmethacrylat, 9,38 g Glycidylmethacrylat, 21,14 g Styrol und 1,08 g tert-butyl Peroxybenzoat, Akzo Nobel zudosiert. Nach beendeter Dosierung werden sofort 0,18 g tert-butyl Peroxybenzoat zugegeben. Nach weiteren 30 Minuten und 60 Minuten werden noch mal je 0,18 g tert-butyl Peroxybenzoat zugesetzt. Danach wird der Ansatz noch eine Stunde bei 135 °C gehalten.

Das hier erhaltene Produkt besitzt als Polymerrückgrat ein Poly(meth)acrylatrückgrat und weist entlang des Poly(meth)acrylatrückgrats Glycidylgruppen auf, jedoch weniger als in Vergleichsbeispiel C.

Es werden folgende GPC-Daten für das Produkt gefunden:

$M_w$: 12378 g/mol, $M_n$: 4850 g/mol, Polydispersität: 2,55

**ANWENDUNGSBEISPIELE UND TESTVERFAHREN**

**1. Bestimmung der Hydrophobie der Formulierungen durch Messung des Wasser-Kontaktwinkels**

Die Beschichtungen wurden drei Tage bei 40 °C gehärtet. Die Kontaktwinkelmessungen gegenüber Wasser wurden, nach dreitägiger Lagerung der Proben bei Raumtemperatur, durchgeführt (Messgerät: Krüss G2, Easy Drop).

**2. Anschmutzungstests an den Formulierungen**

Es wurden der Carbon Black Slurry Test ("CB-Slurry-Test"), der Carbon Black Handcreme Test ("CB-Creme-Test"), der Carbon Black Mineralöl Test ("CB-Öl-Test") sowie der "Marker-Test" durchgeführt.

Der Bewertungsbereich reicht von 1 bis 5, wobei der Wert 1 "keine Rückstände" bedeutet, während der Wert 5 "große Rückstände" bedeutet.

**(a) Carbon Black Slurry Test ("CB-Slurry-Test")**

Es wird eine Carbon-Black-Slurry hergestellt, indem 2,0 g Spezial Black 6 (Evonik), 100 g Wasser und 5 Tropfen

Flüssigseife (Pril®) vermischt werden. Die Carbon-Black-Slurry wird mit einem kleinen Pinsel auf das beschichtete Blech aufgebracht. Anschließend wird 1 Stunde bei 50 °C getrocknet. Dann werden die Bleche unter fließendem Wasser und unter Verwendung eines weichen Pinsels gewaschen. Es wird solange ohne Verwendung von Seife oder härterem Schrubben gewaschen, bis die Beschichtung so gut wie möglich gereinigt ist.

**(b) Carbon Black Handcreme Test ("CB-Creme-Test"):**

Es wird eine 1 gewichtsprozentige Präparation von Carbon Black Pulver (Typ FW 200 von der Firma Evonik Degussa) in einer Handcreme (Wuta Kamille Handcreme der Firma Herbacin Cosmetic GmbH) hergestellt. Diese wird mit dem Finger auf den beschichteten Blechen verrieben. Die angeschmutzten Bleche werden über Nacht bei Raumtemperatur gelagert und anschließend mit trockenem Papier (Tork Papierhandtücher der Firma Svenska Cellulosa AB) oder nassem Papier (Seife), welches mit einer 5 %-igen Pril®-Lösung getränkt wurde, gereinigt, um die Reinigungsfähigkeit zu überprüfen.

**(c) Carbon Black Mineralöl Test ("CB-Öl-Test"):**

Es wird eine 1 gewichtsprozentige Aufschlämmung von Carbon Black Pulver (Typ FW 200 von der Firma Evonik Degussa) in Mineralöl (Q8 Puccini 32P der Firma Kuwait Petroleum International Lubricants) hergestellt. Diese wird mit dem Finger auf den beschichteten Blechen verrieben. Die angeschmutzten Bleche werden über Nacht bei Raumtemperatur gelagert und anschließend mit trockenem Papier (Tork Papierhandtücher der Firma Svenska Cellulosa AB)oder nassem Papier, welches mit einer 5 %-igen Pril®-Lösung getränkt wurde gereinigt, um die Reinigungsfähigkeit zu überprüfen.

**3. Marker-Test**

Es wird mit einem Permanent-Marker des Typs "Magic Ink Red" (erhältlich von der Firma Magic Ink Company, Japan), die Lackoberfläche beschriftet nach dem Trocknen (1 Minute) der Tinte wird versucht diese mit einem trockenen Tuch abzuwischen oder mit Isopropanol getränktem Papier. Der Bewertungsbereich reicht von 1 bis 5, wobei der Wert 1 bedeutet "die Tinte lässt sich restlos mit einem Papiertuch entfernen" und der Wert 5 bedeutet lässt sich praktisch nicht entfernen".

**4. Messung des Verlaufs der Formulierungen**

Der Verlauf wurde mit dem Wave-Scan-Dual-Gerät der Firma BYK-Gardner auf den beschichteten Blechen gemessen. Es wurde die lange Welle (LW = "long wave") und die kurze Welle (SW = "short wave") bestimmt.

**5. Bestimmung des Gleitwiderstandes**

Die Bestimmung des Gleitwiderstandes (slip) beziehungsweise der Reduzierung des Gleitwiderstands erfolgte mit dem Slip-Messgerät Altek Modell 9505 AE nach der anwendungstechnischen Prüfmethode APM-001 der BYK-Chemie GmbH. Hierzu wird der zu prüfende Beschichtungsstoff auf 10x40 cm große Glasplatten, die zuvor in der Spülmaschine gereinigt wurden, appliziert. Die Platte wir auf eine Aufziehbank geklemmt und so positioniert, dass ein 500g-Gewicht mittig auf die Beschichtung gestellt werden kann. Das Gewicht wird mit einer Geschwindigkeit von 5 Zoll/min über die Probe geschoben. Die Messungen werden gegen eine Standard-Probe (Null-Probe) durchgeführt, auf die bei der Auswertung als Bezug genommen wird. Bei der Auswertung wird ein Absolutwert (COF = coefficient of friction) angegeben

**<u>Beschichtunasmittel-Systeme</u>**

Die anwendungstechnische Prüfung der erfindungsgemäßen Polysiloxane erfolgte in fünf verschiedenen Beschichtungsmitteln.

**Beschichtungsmittel 1**

**Beschichtungsmittel auf der Basis eines lösemittelbasierten pigmentierten Epoxyharz/ Polyamid-Härter-Systems (konventionelles Epoxy-System)**

Zur Herstellung des Beschichtungsmittels wird wie folgt vorgegangen. Zunächst wird eine Komponente A

hergestellt, indem die an Positionen 1 bis 3 der Tabelle 1 aufgeführten Materialien mittels eines Dissolvers mit einer Zahnradscheibe bei 2000 Umdrehungen pro Minute bis zur Homogenität vermischt werden. Die entsprechenden Mengen sind in Tabelle 1 in Gewichtsteilen angegeben. Anschließend wird das Material der Position 4 der Tabelle 1 zugegeben und bei 3000 Umdrehungen pro Minute gemischt bis sich ein einwandfreies Gel bildet. Danach werden die Materialien der Positionen 5 bis 7 der Tabelle 1 bei 3000 Umdrehungen pro Minute zugegeben und es wird weitere 15 Minuten gerührt. Danach werden die Materialien der Positionen 8 bis 11 der Tabelle 1 bei 2000 Umdrehungen pro Minute zugegeben und es wird weitere 5 Minuten gerührt.

Komponente B wird hergestellt indem die Materialien der Positionen 12 bis 14 der Tabelle 1 für 15 Minuten bei 2000 Umdrehungen pro Minute verrührt werden.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 µm auf eine Glasplatte appliziert. Die Glasplatte wird über Nacht bei Raumtemperatur (23 °C) aufbewahrt und anschließend für 3 Tage in einem Ofen bei 40 °C getrocknet.

Nach dem Abkühlen wird der Beschichtungsfilm den oben aufgeführten Testverfahren unterzogen.

Tabelle 1

| Position | Komponente A | |
|---|---|---|
| 1 | Dowanol PM[1] | 3,9 |
| 2 | Xylol | 4,7 |
| 3 | Epikote 1001X75[2] | 15,6 |
| 4 | Bentone SD-2[3] | 1,2 |
| 5 | Disperbyk-142[4] | 0,6 |
| 6 | Ti-Pure R902[5] | 25,0 |
| 7 | Blanc Fixe N[b] | 14,6 |
| 8 | Epikote 1001X75[2] | 23,4 |
| 9 | Solvesso 100[7] | 5,9 |
| 10 | Dowanol PM[1] | 2,4 |
| 11 | Xylol | 2,7 |
| | Gesamt | 100,0 |
| | | |
| Position | Komponente B | |
| 12 | Ancamide 220-X-70[8] | 10,0 (95,5 %-ig Vernetzer) |
| 13 | Ancamine K-54[9] | 0,4 |
| 14 | Xylol | 2,0 |
| | Gesamt | 12,4 |

[1]Dowanol PM ist ein Propylenglykolmethylether der Firma Dow Chemical Company
[2]Epikote 1001 X75 ist eine 75 gew.-%ige Lösung eines Epoxaharzes in Xylol der Firma Momentive
[3]Bentone SD-2 ist ein Rheologieadditiv auf Basis eines organisch modifizierten Bentonittons der Firma Elementis Specialties
[4]Disperbyk-142 ist ein Netz- und Dispergiermittel der Firma Byk Chemie GmbH
[5]Ti-Pure R902 ist ein Titandioxid-Pigment der Firma DuPont Titanium Technologies
[6]Blanc Fixe N is ein synthetisches Bariumsulfat der Firma Solvay Chemicals
[7]Solvesso 100 ist ein aromatisches Lösemittel der Firma ExxonMobil
[8]Ancamide 220-X-70 ist ein Härter der Firma Air Products
[9]Ancamine K-54 ist ein Epoxy-Beschleuniger der Firma Air Products

**Beschichtungsmittel 2**

**Beschichtungsmittel auf der Basis eines lösemittelfreien pigmentierten Epoxyharz/Polyamid-Epoxy-Härter-Systems (Lösemittelfreies Epoxysystem mit hoher Viskosität)**

Zur Herstellung des Beschichtungsmittels wird wie folgt vorgegangen. Zunächst wird eine Komponente A hergestellt, indem die an Positionen 1 bis 5 der Tabelle 2 aufgeführten Materialien mittels eines Dissolvers mit einer Zahnradscheibe bei 2000 Umdrehungen pro Minute bis zur Homogenität vermischt werden. Die entsprechenden Mengen sind in Tabelle 2 in Gewichtsteilen angegeben. Anschließend wird das Material der Positionen 6 bis 7 der Tabelle 2 zugegeben und bei 3000 Umdrehungen pro Minute gemischt. Danach werden die Materialien der Position 8 der Tabelle 2 bei 3000 Umdrehungen pro Minute zugegeben und es wird weitere 10 Minuten gerührt.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 μm auf eine Glasplatte appliziert. Die Glasplatte über Nacht bei Raumtemperatur (23 °C) aufbewahrt und anschließend für 3 Tage in einem Ofen bei 40 °C getrocknet.

Nach dem Abkühlen wird der Beschichtungsfilm den oben aufgeführten Testverfahren unterzogen.

Tabelle 2

| Position | Komponente A | |
|---|---|---|
| 1 | Epikote 828[1] | 41,00 |
| 2 | Ruetasolv DI[2] | 5,00 |
| 3 | Disperbyk 2152[3] | 0,80 |
| 4 | BYK A 530[4] | 0,80 |
| 5 | BYK-310[5] | 0,10 |
| 6 | Blanc Fixe micro[5] | 25,00 |
| 7 | Ti-Pure R960[7] | 23,00 |
| 8 | Ruetasolv DI | 4,30 |
| | Gesamt | 100,0 |
| | | |
| Position | Komponente B | |
| 9 | Epikure 3155[8] | 28,70 |
| | Gesamt | 28,70 |

[1]Epikote 828 ist ein Epoxyharz von Shell International Chemical Corporation
[2]Ruetasolv DI "Ruetasolv DI" ist Di-isopropyl Naphthalene von Rutgers Kureha
[3]Disperbyk 2152 ist ein Netz- und Dispergiermittel der Firma Byk Chemie GmbH
[4]BYK A 530 ist ein Entschäumer der Firma Byk Chemie GmbH
[5] BYK-310 ist ein Oberflächenadditiv der Firma Byk Chemie GmbH
[6] Blanc Fixe micro ist ein synthetisches Bariumsulfat der Firma Sachtleben Chemie
[7]Ti-Pure R902 ist ein Titandioxid-Pigment der Firma DuPont Titanium Technologies
[8] Epikure 3155 ist ein Härter der Momentive

**Beschichtungsmittel 3**

**Beschichtungsmittel auf der Basis eines lösemittelfreien pigmentierten Epoxyharz/Polyaminoamidhärter-Systems (lösemittelfreies Epoxysystem mit niedriger Viskosität)**

Zur Herstellung des Beschichtungsmittels wird wie folgt vorgegangen. Zunächst wird eine Komponente A hergestellt, indem die an Positionen 1 bis 4 der Tabelle 3 aufgeführten Materialien mittels eines Dissolvers mit einer

Zahnradscheibe bei 2000 Umdrehungen pro Minute bis zur Homogenität vermischt werden. Die entsprechenden Mengen sind in Tabelle 3 in Gewichtsteilen angegeben. Danach werden die Materialien der Positionen 5 bis 6 der Tabelle 3 bei 3000 Umdrehungen pro Minute zugegeben und es wird weitere 15 Minuten gerührt. Danach werden die Materialien der Position 7 der Tabelle 3 bei 2000 Umdrehungen pro Minute zugegeben und es wird weitere 5 Minuten gerührt.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 µm auf eine Glasplatte appliziert. Die Glasplatte über Nacht bei Raumtemperatur (23 °C) aufbewahrt und anschließend für 3 Tage in einem Ofen bei 40 °C getrocknet.

Nach dem Abkühlen wird der Beschichtungsfilm den unten aufgeführten Testverfahren unterzogen.

Tabelle 3

| Position | Komponente A | |
|---|---|---|
| 1 | Araldite GY793 BD[1] | 41.00 |
| 2 | Disperbyk 142[2] | 1.00 |
| 3 | BYK A 530[3] | 0.80 |
| 4 | BYK 310[4] | 0.20 |
| 5 | Blancfixe micro[5] | 30,00 |
| 6 | Ti-Pure R960[6] | 22.00 |
| 7 | Benzylalkohol[7] | 5.00 |
| | Gesamt | 100,0 |
| | | |
| Position | Komponente B | |
| 8 | Aradur 44 BD[8] | 17,00 |
| | Gesamt | 17,00 |

[1]Araldite GY793 BD ist ein Epoxyharz von Hunstman
[2]Disperbyk 142 ist ein Netz- und Dispergiermittel der Firma Byk Chemie GmbH
[3]BYK A 530 ist ein Entschäumer der Firma Byk Chemie GmbH
[5] BYK-310 ist ein Oberflächenadditiv der Firma Byk Chemie GmbH
[6] Blanc Fixe micro ist ein synthetisches Bariumsulfat der Firma Sachtleben Chemie
[7]Ti-Pure R902 ist ein Titandioxid-Pigment der Firma DuPont Titanium Technologies
[8]Aradur 44 BD ist ein Härter der Firma Hunstman

**Beschichtungsmittel 4**

**Beschichtungsmittel auf der Basis eines "High-Solids" pigmentierten Epoxyharz/Polyamidhärter-Systems (Epoxysystem mit hohem Festkörperanteil und hoher Viskosität)**

Zur Herstellung des Beschichtungsmittels wird wie folgt vorgegangen. Zunächst wird eine Komponente A hergestellt, indem die an Positionen 1 bis 4 der in Tabelle 4 aufgeführten Materialien mittels eines Dissolvers mit einer Zahnradscheibe bei 2000 Umdrehungen pro Minute bis zur Homogenität vermischt werden. Die entsprechenden Mengen sind in Tabelle 4 in Gewichtsteilen angegeben. Danach werden die Materialien der Positionen 5 bis 6 der Tabelle 4 bei 3000 Umdrehungen pro Minute zugegeben und es wird weitere 15 Minuten gerührt. Danach werden die Materialien der Positionen 7 bis 9 der Tabelle 4 bei 2000 Umdrehungen pro Minute zugegeben und es wird weitere 5 Minuten gerührt.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 µm auf eine Glasplatte appliziert. Die Glasplatte über Nacht bei Raumtemperatur (23 °C) aufbewahrt und anschließend für 3 Tage in einem Ofen bei 40 °C getrocknet.

Nach dem Abkühlen wird der Beschichtungsfilm den oben aufgeführten Testverfahren unterzogen.

Tabelle 4

| Position | Komponente A | |
|---|---|---|
| 1 | Epikote 874X90[1] | 38,20 |
| 2 | BYK-A530[2] | 0,80 |
| 3 | BYK-310[3] | 0,10 |
| 4 | Disperbyk-2152[4] | 0,80 |
| 5 | Ti-Pure R960[5] | 25,40 |
| 6 | Blanc Fixe micro[5] | 25,70 |
| 7 | Epikote 834X80[7] | 4,60 |
| 8 | MEK[8] | 2,00 |
| 9 | Dowanol PM[9] | 1,40 |
| | Gesamt | 100,0 |
| | | |
| Position | Komponente B | |
| 8 | Epikure 3155[10] | 19,74 |
| | Gesamt | 19,74 |

[1]Epikote 874X90 ist ein Epoxyharz von Momentive
[2]BYK A 530 ist ein Entschäumer der Firma Byk Chemie GmbH
[3]BYK 310 ist ein Oberflächenadditiv der Firma Byk Chemie GmbH
[4]Disperbyk 2152 ist ein Netz- und Dispergiermittel der Firma Byk Chemie GmbH
[5] Blanc Fixe micro ist ein synthetisches Bariumsulfat der Firma Sachtleben Chemie
[6]Ti-Pure R902 ist ein Titandioxid-Pigment der Firma DuPont Titanium Technologies
[7]Epikote 834X80 ist ein Epoxyharz von Momentive
[8]MEK ist Methylethylketone
[9]Dowanol PM ist Propyleneglykol mono-Methylether der Firma Dow
[10]Epikure 3155 ist ein Härter der Firma Momentive

**Beschichtungsmittel 5**

**Beschichtungsmittel auf der Basis eines "High-Solids" pigmentierten Epoxyharz/Polyamidhärter-Systems (Epoxysystem mit hohem Festkörperanteil und niedriger Viskosität)**

Zur Herstellung des Beschichtungsmittels wird wie folgt vorgegangen. Zunächst wird eine Komponente A hergestellt, indem die an Positionen 1 bis 4 der in Tabelle 5 aufgeführten Materialien mittels eines Dissolvers mit einer Zahnradscheibe bei 2000 Umdrehungen pro Minute bis zur Homogenität vermischt werden. Die entsprechenden Mengen sind in Tabelle 5 in Gewichtsteilen angegeben. Danach werden die Materialien der Positionen 5 bis 6 der Tabelle 5 bei 3000 Umdrehungen pro Minute zugegeben und es wird weitere 15 Minuten gerührt. Danach werden die Materialien der Positionen 7 bis 9 der Tabelle 5 bei 2000 Umdrehungen pro Minute zugegeben und es wird weitere 5 Minuten gerührt. Anschluss wird mit der Position 11 bei 2000 Umdrehungen pro Minute verdünnt und es wird weitere 5 Minuten gerührt.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 μm auf eine Glasplatte appliziert. Die Glasplatte über Nacht bei Raumtemperatur (23 °C) aufbewahrt und anschließend für 3 Tage in einem Ofen bei 40 °C getrocknet.

Nach dem Abkühlen wird der Beschichtungsfilm den oben aufgeführten Testverfahren unterzogen.

Tabelle 5

| Position | Komponente A | |
|---|---|---|
| 1 | Epikote 874X90[1] | 38,20 |
| 2 | BYK-A530[2] | 0,80 |
| 3 | BYK-310[3] | 0,10 |
| 4 | Disperbyk-2152[4] | 0,80 |
| 5 | Ti-Pure R960[5] | 25,40 |
| 6 | Blanc Fixe micro[5] | 25,70 |
| 7 | Epikote 834X80[7] | 4,60 |
| 8 | MEK[8] | 2,00 |
| 9 | Dowanol PM[9] | 1,40 |
| | Gesamt | 100,0 |
| | | |
| Position | Komponente B | |
| 10 | Epikure 3155[10] | 19,74 |
| | Gesamt | 19,74 |
| Position | Komponente C | |
| 11 | Dowanol PM[9] | 8,00 |
| | Gesamt | 8,00 |

**TESTERGEBNISSE**

Beschichtungsmittel 1

Tabelle 6a

| Additiv | CB-Slurry-Test | CB-Creme-Test | | Marker-Test |
|---|---|---|---|---|
| | | Seife | Tuch | Tuch |
| ohne Additiv | 3 | 5 | 5 | 5 |
| Vergleichsbeispiel A | 1 | 1 | 2 | 1 |
| Vergleichsbeispiel B | 5 | 3 | 4 | 5 |
| Vergleichsbeispiel C | 5 | 1 | 4 | 5 |
| Vergleichsbeispiel D | 5 | 5 | 5 | 5 |
| BYK 307* (Vergleich) | 1 | 5 | 5 | 4 |
| Beispiel 3 (Vergleich) | 1 | 1 | 2 | 1 |
| Beispiel 4 (Vergleich) | 1 | 1 | 2 | 1 |
| Beispiel 1 | 1 | 1 | 1 | 1 |
| Beispiel 2 | 1 | 1 | 1 | 1 |
| Beispiel 5 | 1 | 1 | 1 | 1 |
| Beispiel 6 | 1 | 1 | 1 | 1 |

(fortgesetzt)

| Additiv | CB-Slurry-Test | CB-Creme-Test | | Marker-Test |
|---|---|---|---|---|
| | | Seife | Tuch | Tuch |
| Beispiel 7 | 1 | 1 | 1 | 1 |
| *polyethermodifiziertes Polysiloxan der Firma Byk-Chemie GmbH | | | | |

Die Ergebnisse der Tabelle 6a zeigen, dass durch die Verwendung der erfindungsgemäßen Polysiloxane als Additiv mindestens vergleichbar gute bei einigen Tests sogar bessere schmutz- und ölabweisende Oberflächen erzielt werden, als mit den Vergleichsprodukten. Überraschend war insbesondere, dass die erfindungsgemäßen Polysiloxane sogar bessere Eigenschaften aufweisen, als das Additiv des Vergleichsbeispiels A, obgleich dieses aufgrund seines Epoxy-Amin-Rückgrats chemisch der epoxyharzbasierten Beschichtungsmittelzusammensetzung des Beschichtungsmittel 1 noch näher kommt.

Tabelle 6b

| | Verlauf (Lw / Sw) | COF | Marker-Test | Wasserkontaktwinkel (°) |
|---|---|---|---|---|
| ohne Additiv | 24.5 / 25.4 | 0.55 | 5 | 79 |
| Beispiel 3 (Vergleich) | 3.9 / 18.0 | 0.05 | 1 | 99 |
| Beispiel 4 (Vergleich) | 3.9 / 17.4 | 0.06 | 1 | 96 |
| Beispiel 1 | 3.6 / 17.1 | 0.05 | 1 | 101 |
| Beispiel 5 | 3.4 / 17.2 | 0.05 | 1 | 102 |
| Beispiel 6 | 3.4 / 17.2 | 0.05 | 1 | 100 |

Den Ergebnissen der Tabelle 6b ist entnehmbar, dass die erfindungsgemäßen Polysiloxane sowohl einen besseren Verlauf, als auch einen höheren Wasserkontaktwinkel aufweisen als die Additive der nicht erfindungsgemäßen Vergleichsbeispiele 3 und 4.

Beschichtungsmittel 2

Tabelle 7

| | CB-Slurry-Test | CB-Creme-Test | | Verlauf (Lw / Sw) | COF | Marker-Test | Wasser Kontaktwinkel (°) |
|---|---|---|---|---|---|---|---|
| | | Tuch | Seife | | | | |
| ohne Additiv | 3 | 5 | 5 | 27.9 / 28.4 | 0.17 | 5 | 86 |
| Beispiel 3 (Vergleich) | 1 | 1 | 1 | 32.7 / 27.9 | 0.06 | 1 | 99 |
| Beispiel 4 (Vergleich) | 1 | 1 | 1 | 25.3 / 28.4 | 0.07 | 2 | 98 |
| Beispiel 1 | 1 | 1 | 1 | 27.3 / 28.1 | 0.04 | 1 | 103 |
| Beispiel 5 | 1 | 1 | 1 | 17.6 / 28.4 | 0.04 | 1 | 99 |
| Beispiel 6 | 1 | 1 | 1 | 17.6 / 27.3 | 0.05 | 1 | 98 |

Auch im Beschichtungsmittel 2 besitzen die erfindungsgemäßen Polysiloxane eine deutlich höhere verlauffördernde Wirkung im Longwave-Bereich etwa gleichem Wasserkontaktwinkel oder sie besitzen bei ähnlichem Verlauf einen höheren Wasserkontaktwinkel.

Beschichtungsmittel 3

Tabelle 8

| | CB-Slurry-Test | CB-Creme-Test | | Verlauf (Lw /Sw) | COF | Marker-Test | Wasser Kontaktwinkel (°) |
|---|---|---|---|---|---|---|---|
| | | Tuch | Seife | | | | |
| ohne Additiv | 1 | 3 | 5 | 15.1 / 30.7 | 0.19 | 5 | **95** |
| Beispiel 3 (Vergleich) | 4 | 1 | 1 | 8.5 / 23.0 | 0.04 | 1 | **99** |
| Beispiel 4 (Vergleich) | 1 | 1 | 1 | 7.3 / 23.5 | 0.04 | 1 | **93** |
| Beispiel 1 | 1 | 1 | 1 | 8.0 / 23.1 | 0.04 | 1 | **97** |
| Beispiel 5 | 1 | 1 | 1 | 9.5 / 25.7 | 0.04 | 1 | **97** |
| Beispiel 6 | 2 | 1 | 1 | 9.4 / 25.5 | 0.05 | 1 | **100** |

Beschichtungsmittel 4

Tabelle 9

| | CB-Slurry-Test | CB-Creme-Test | | Verlauf (Lw / Sw) | COF | Marker-Test | Wasser Kontaktwinkel (°) |
|---|---|---|---|---|---|---|---|
| | | Tuch | Seife | | | | |
| ohne Additiv | 1 | 5 | 5 | 6.4 / 12.7 | 0.14 | 5 | 82 |
| Beispiel 3 (Vergleich) | 1 | 5 | 5 | 6.9 / 8.9 | 0.08 | 2 | 89 |
| Beispiel 4 (Vergleich) | 1 | 5 | 5 | 8.6 / 9.8 | 0.08 | 3 | 88 |
| Beispiel 1 | 1 | 5 | 3 | 7.7 / 9.1 | 0.08 | 2 | 90 |
| Beispiel 5 | 1 | 4 | 3 | 7.5 / 10.0 | 0.09 | 1 | 99 |
| Beispiel 6 | 1 | 4 | 3 | 7.8 / 9.9 | 0.10 | 2 | 93 |

Beschichtungsmittel 5

Tabelle 10

| | CB-Slurry-Test | CB-Creme-Test | | Verlauf (Lw / Sw) | COF | Marker-Test | Wasser Kontakt-winkel (°) |
|---|---|---|---|---|---|---|---|
| | | Tuch | Seife | | | | |
| ohne Additiv | 4 | 5 | 5 | 7.1 / 7.6 | 0.15 | 5 | 78 |
| Beispiel 3 (Vergleich) | 1 | 3 | 2 | 6.7 / 7.9 | 0.06 | 2 | 92 |
| Beispiel 4 (Vergleich) | 1 | 5 | 3 | 5.7 / 7.6 | 0.07 | 1 | 88 |
| Beispiel 1 | 1 | 3 | 1 | 5.4 / 7.3 | 0.07 | 1 | 93 |
| Beispiel 5 | 1 | 2 | 1 | 6.2 / 8.3 | 0.09 | 1 | 93 |

(fortgesetzt)

| | CB-Slurry-Test | CB-Creme-Test | | Verlauf (Lw / Sw) | COF | Marker-Test | Wasser Kontakt-winkel (°) |
|---|---|---|---|---|---|---|---|
| | | Tuch | Seife | | | | |
| Beispiel 6 | 1 | 2 | 1 | 6.5 / 9.0 | 0.08 | 1 | 98 |

Die Ergebnisse der Tabellen zeigen, dass die erfindungsgemäßen Polysiloxane die Lackoberfläche hydrophobieren und mit "Easy-to-Clean"-Eigenschaften (Leichtreinigungs-Eigenschaften) ausrüsten.

## Patentansprüche

1. Zusammensetzung, welche gewählt ist aus der Gruppe bestehend aus einer polymeren Formmasse, einem Thermoplasten und einem Beschichtungsmittel, und wobei die Zusammensetzung ein oder mehrere Polysiloxane enthält, welche erhältlich sind durch die Addition mindestens eines monovinylfunktionellen Polysiloxans und mindestens einer epoxyfunktionellen, monovinylfunktionellen Komponente an ein Si-H-funktionelles Polysiloxan.

2. Zusammensetzung gemäß Anspruch 1, wobei das Si-H-funktionelle Polysiloxan kettenförmig ist.

3. Zusammensetzung gemäß Anspruch 1 oder 2, **dadurch gekennzeichnet, dass** das mindestens eine monovinylfunktionelle Polysiloxane die Formel (I) besitzt:

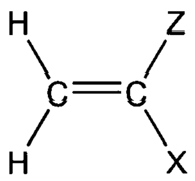

(I)

worin

Z für Wasserstoff oder eine Alkylgruppe mit 1 bis 4 Kohlenstoffatomen und
X für einen einbindigen Rest der der folgenden Formel steht:

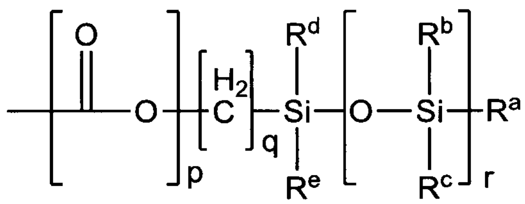

worin $p = 0$ oder 1, $q = 0$ bis 30 und $r = 1$ bis 400 ist und sofern $p = 1$ ist $q \geq 2$ ist,
$R^a$ für einen linearen halogenierten oder nicht halogenierten Alkylrest mit 1 bis 30 Kohlenstoffatomen, einen verzweigten oder zyklischen, halogenierten oder nicht halogenierten Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen oder einen Alkoxyalkylenoxidalkylrest oder Alkoxypolyalkylenoxidalkylrest steht,
alle $R^b$, $R^c$, $R^d$ und $R^e$ unabhängig voneinander für einen linearen halogenierten oder nicht halogenierten Alkylrest mit 1 bis 30 Kohlenstoffatomen, einen verzweigten oder zyklischen, halogenierten oder nicht halogenierten Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatome stehen,
$R^d$ und $R^e$ zusätzlich unabhängig voneinander für $R^a[SiR^bR^cO]_r$ stehen können, worin $R^a$, $R^b$, $R^c$ und r wie oben definiert sind und unabhängig davon ausgewählt sind.

4. Zusammensetzung gemäß einem der Ansprüche 1 bis 3, **dadurch gekennzeichnet, dass** die mindestens eine epoxyfunktionelle, monovinylfunktionelle Komponente die Formel (II) besitzt:

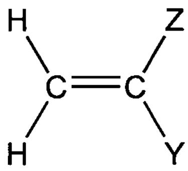

(II)

worin

Z für Wasserstoff oder eine Alkylgruppe mit 1 bis 4 Kohlenstoffatomen und
Y für einen einbindigen Rest der folgenden Formel steht:

-L-Epoxy

worin L für eine Verbindungsgruppe und Epoxy für einen Oxiranring stehen und wobei der Oxiranring mit einem oder beiden Kohlenstoffatomen an die Verbindungsgruppe L gebunden ist.

5. Zusammensetzung gemäß einem oder mehreren der Ansprüche 1 bis 4, **dadurch gekennzeichnet, dass** mindestens eine vom monovinylfunktionellen Polysiloxan und von der epoxyfunktionellen, monovinylfunktionellen Komponente verschiedene monovinylfunktionelle Komponente mit dem Si-H-funktionellen Polysiloxan zur Reaktion gebracht wird und diese Komponente die Formel (III) besitzt:

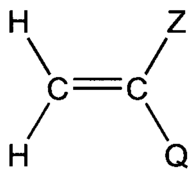

(III)

worin

Z für Wasserstoff oder eine Alkylgruppe mit 1 bis 4 Kohlenstoffatomen steht und
Q für einen einbindigen Rest der folgenden Formel steht:

$-(L')_v-R$

worin v = 0 oder 1 ist,
L' für eine Verbindungsgruppe steht und
R für einen Rest $-SiR^x{}_nR^y{}_{3-n}$ steht, worin
n = 1 bis 3 ist,
$R^x$ unabhängig voneinander für Halogen, OAlkyl, oder für O-CO-Alkyl steht, und
$R^y$ für Alkyl steht oder für Aryl mit 6 bis 10 Kohlenstoffatomen; oder
R für einen polymeren Rest mit Ether-, Ester- und/oder Urethangruppen steht.

6. Zusammensetzung gemäß einem oder mehreren der Ansprüche 1 bis 5, **dadurch gekennzeichnet, dass** mindestens eine monohydroxyfunktionelle polymere Komponente, die Ether, Ester und/oder Urethangruppen aufweist durch Kondensationsreaktion mit dem Si-H-funktionellen Polysiloxan umgesetzt wird bevor Additionsreaktionen monovinylfunktioneller Komponenten an das Si-H-funktionelle Polysiloxan durchgeführt werden.

7. Zusammensetzung gemäß einem oder mehreren der Ansprüche 1 bis 6, **dadurch gekennzeichnet, dass** dieses

allgemeine Formel (IV) besitzt:

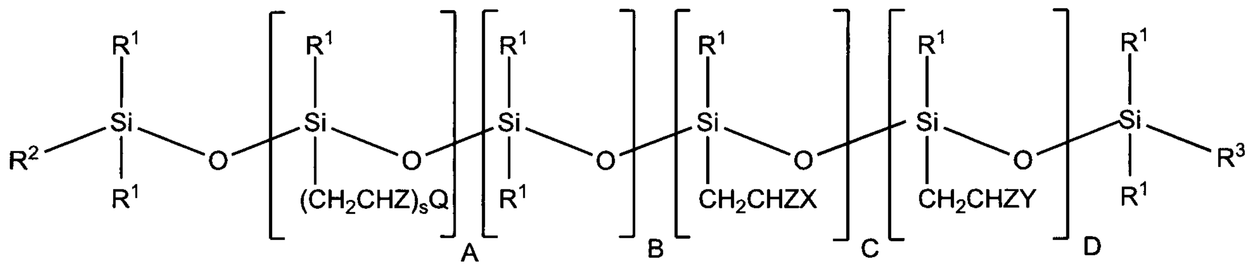

(IV)

wobei

X, Y, Z und Q wie in Ansprüchen 1 bis 6 definiert sind,
s = 0 oder 1 ist;
$R^1$ unabhängig voneinander für $C_1$-$C_{14}$-Alkyl, $C_6$-$C_{10}$-Aryl oder $C_7$-$C_{12}$-Aralkyl stehen;
$R^2$ und $R^3$ unabhängig voneinander für $CH_2CHZX$, $CH_2CHZY$ oder $(CH_2CHZ)_sQ$, oder für $-(R^4)_i$-$C_1$-$C_{14}$-Alkyl, $-(R^4)_i$-$C_6$-$C_{14}$-Aryl oder $-(R^4)_i$-$C_7$-$C_{14}$-Aralkyl stehen, worin i = 0 oder 1 ist und $R^4$ für O, O-CO, O-CO-O oder $-OSO_2$- steht;
A = 0 bis 20, B = 2 bis 300, C = 0 bis 20 und D = 0 bis 20 ist;
wobei für C = 0 gilt, dass $R^2$ = X und/oder $R^3$ = X ist, und
wobei für D = 0 gilt, dass $R^2$ = Y und/oder $R^3$ = Y ist.

8. Zusammensetzung gemäß einem oder mehreren der Ansprüche 1 bis 7, **dadurch gekennzeichnet, dass** die Zusammensetzung Epoxidharze enthält.

9. Zusammensetzung gemäß einem der Ansprüche 1 bis 8, **dadurch gekennzeichnet, dass** das oder die Polysiloxane in einer Gesamtmenge von 0,1 bis 10 Gew.-% bezogen auf das Gesamtgewicht der Zusammensetzung enthalten sind.

10. Gehärtete Zusammensetzung erhältlich aus einer Zusammensetzung gemäß einem der Ansprüche 1 bis 9.

11. Gehärtete Zusammensetzung gemäß Anspruch 10, wobei es sich bei der Zusammensetzung gemäß einem der Ansprüche 1 bis 9 um ein Beschichtungsmittel handelt.

12. Gehärtete Zusammensetzung gemäß einem der Ansprüche 10 oder 11, wobei deren Oberfläche mit anti-adhäsiven und/oder schmutzabweisenden Eigenschaften ausgerüstet ist.

## Claims

1. Composition selected from the group consisting of a polymeric molding compound, a thermoplastic and a coating agent, and
wherein the composition contains one or more polysiloxanes that are obtainable by addition of at least one monovinyl-functional polysiloxane and at least one epoxy-functional, monovinyl-functional component to a Si-H-functional polysiloxane.

2. Composition according to claim 1, wherein the Si-H-functional polysiloxane has a chain form.

3. Composition according to claim 1 or 2, **characterised in that** the at least one monovinyl-functional polysiloxane has the following formula (I):

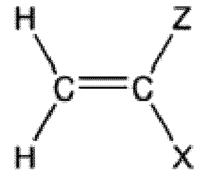

(I)

wherein
Z represents hydrogen or an alkyl group with 1 to 4 carbon atoms, and X represents a single-bond radical of the following formula:

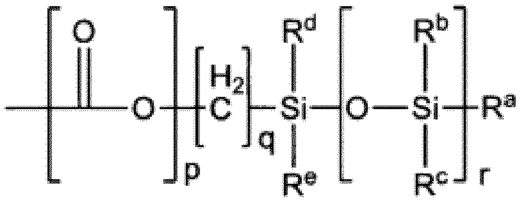

wherein p = 0 or 1, q = 0 to 30 and r = 1 to 400, and q ≥ 2, if p =1,
$R^a$ represents a linear halogenated or non-halogenated alkyl radical with 1 to 30 carbon atoms, a branched or cyclic, halogenated or non-halogenated alkyl radical with 3 to 30 carbon atoms, or an aryl radical with 6 to 30 carbon atoms, or an alkylaryl radical or an arylalkyl radical with 7 to 30 carbon atoms, or an alkoxyalkylene oxide alkyl radical or an alkoxypolyalkylene oxide alkyl radical,
all $R^b$, $R^c$, $R^d$ und $R^e$ represent, independently one from the other, a linear halogenated or non-halogenated alkyl radical with 1 to 30 carbon atoms, a branched or cyclic, halogenated or non-halogenated alkyl radical with 3 to 30 carbon atoms, or an aryl radical with 6 to 30 carbon atoms, or an alkylaryl radical or an arylalkyl radical with 7 to 30 carbon atoms,
$R^d$ and $R^e$ can in addition represent, independently of one another, $R^a[SiR^bR^cO]_r$, wherein
$R^a$, $R^b$, $R^c$ and r are defined as above and are selected independently thereof.

4. Composition according to any one of claims 1 to 3, **characterised in that** the at least one epoxy-functional, monovinyl-functional component presents the following formula (II):

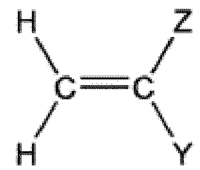

(II)

wherein

Z represents hydrogen or an alkyl group with 1 to 4 carbon atoms, and
Y represents a single-bond radical of the following formula:

-L-Epoxy

wherein L represents a linking group, and epoxy an oxirane ring, and wherein the oxirane ring is bound to the linking group L by one or both carbon atoms.

5. Composition according to one or more of claims 1 to 4, **characterised in that** at least one monovinyl-functional

component that is different from the monovinyl-functional polysiloxane and from the epoxy-functional, monovinyl-functional component is brought to react with the Si-H-functional polysiloxane, and this component has the following formula (III):

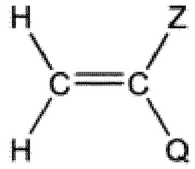

(III)

wherein Z represents hydrogen or an alkyl group with 1 to 4 carbon atoms, and
Q a single-bond radical of the following formula:

$$-(L')_v-R$$

wherein v = 0 or 1,
L' represents a linking group, and
R represents a radical $-SiR^x_nR^y_{3-n}$, wherein
n = 1 to 3,
$R^x$ independently of one another represents halogen, O-alkyl or O-CO-alkyl, and
$R^y$ represents alkyl, or aryl with 6 to 10 carbon atoms; or
R represents a polymeric radical having ether, ester and/or urethane groups.

6. Composition according to one or more of claims 1 to 5, **characterised in that** at least one monohydroxy-functional polymeric component having ether, ester and/or urethane groups is reacted by condensation reaction with the Si-H-functional polysiloxane before effecting addition reactions of monovinyl-functional components to the Si-H-functional polysiloxane.

7. Composition according to one or more of claims 1 to 6, **characterised in that** it has the following general formula (IV):

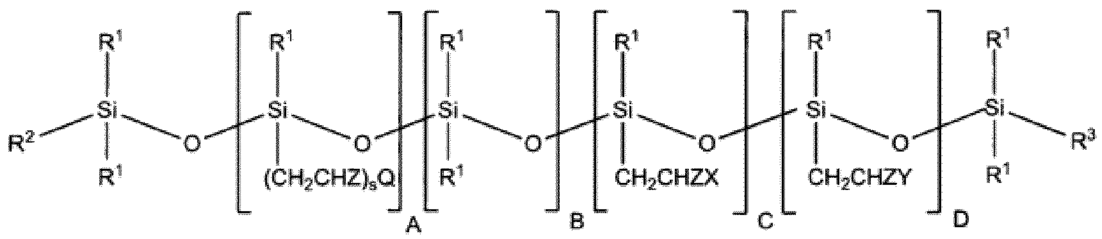

(IV)

wherein

X, Y, Z and Q are as defined in claims 1 to 6,
s = 0 or 1 ;
$R^1$ independently of one another represents $C_1$-$C_{14}$-alkyl, $C_6$-$C_{10}$-aryl or $C_7$-$C_{12}$-aralkyl;
$R^2$ and $R^3$ independently of one another represent $CH_2CHZX$, $CH_2CHZY$ or $(CH_2CHZ)_sQ$, or $-(R^4)_i$-$C_1$-$C_{14}$-alkyl, $-(R^4)_i$-$C_6$-$C_{14}$-aryl or $-(R^4)_i$-$C_7$-$C_{14}$-aralkyl, wherein i = 0 or 1 and $R^4$ represents O, O-CO, O-CO-O or $-OSO_2-$;
A = 0 to 20, B = 2 to 300, C = 0 to 20 and D = 0 to 20;
wherein $R^2$ = X and/or $R^3$ = X, if C = 0, and
wherein $R^2$ = Y and/or $R^3$ = Y, if D = 0, and.

8. Composition according to one or more of claims 1 to 7, **characterised in that** the composition contains epoxide resins.

9. Composition according to any one of claims 1 to 8, **characterised in that** the polysiloxane(s) is/are contained in a total amount of 0.1 to 10 % by weight with respect to the total weight of the composition.

10. Cured composition obtainable from a composition according to any one of claims 1 to 9.

11. Cured composition according to claim 10, wherein the composition according to any one of claims 1 to 9 is a coating agent.

12. Cured composition according to any one of claims 10 or 11, wherein their surface is provided with anti-adhesive and/or dirt-repellent properties.

## Revendications

1. Composition choisi dans le groupe consistant en un matériau de moulage polymérique, un matériau thermoplastique et un agent de revêtement, et
la composition contenant un ou plusieurs polysiloxanes qui peuvent être obtenus par l'addition d'au moins un polysiloxane monovinyl-fonctionnel et au moins un composant époxy-fonctionnel et monovinyl-fonctionnel sur un polysiloxane Si-H-fonctionnel.

2. Composition selon la revendication 1, dans laquelle le polysiloxane Si-H-fonctionnel est caténaire.

3. Composition selon la revendication 1 ou 2, **caractérisée en ce que** l'au moins un polysiloxane monovinyl-fonctionnel présente la formule (I) suivante :

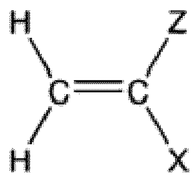

(I)

où

Z représente hydrogène ou un groupe alkyle avec 1 à 4 atomes de carbone, et
X représente un radical monovalent de la formule suivante :

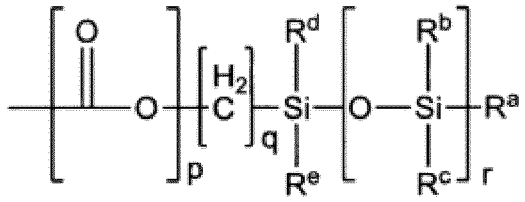

où p = 0 ou 1, q = 0 à 30 et r = 1 à 400, et q ≥ 2, lorsque p = 1,
$R^a$ représente un radical alkyle linéaire halogéné ou non-halogéné avec 1 à 30 atomes de carbone, un radical alkyle ramifié ou cyclique halogéné ou non-halogéné avec 3 à 30 atomes de carbone, ou un radical aryle avec 6 à 30 atomes de carbone, ou un radical alkylaryle ou un radical arylalkyle avec 7 à 30 atomes de carbone, ou un radical alkoxyalkylène-oxyde-alkyle ou alkoxypolyalkylène-oxyde-alkyle,
chaque $R^b$, $R^c$, $R^d$ et $R^e$ représente, indépendamment l'un de l'autre, un radical alkyle linéaire halogéné ou non-halogéné avec 1 à 30 atomes de carbone, un radical alkyle ramifié ou cyclique halogéné ou non-halogéné avec 3 à 30 atomes de carbone, ou un radical aryle avec 6 à 30 atomes de carbone, ou un radical

alkylaryle ou un radical arylalkyle avec 7 à 30 atomes de carbone,
$R^d$ et $R^e$ en outre peuvent représenter, indépendamment l'un de l'autre, $R^a[SiR^bR^cO]_r$, où
$R^a$, $R^b$, $R^c$ et r sont tels que définis ci-dessus et choisis indépendamment de ceux-ci.

**4.** Composition selon l'une quelconque des revendications 1 à 3, **caractérisée en ce que** l'au moins un composant époxy-fonctionnel et monovinyl-fonctionnel présente la formule (II) suivante :

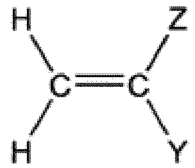

(II)

où

Z représente hydrogène ou un radical alkyle avec 1 à 4 atomes de carbone, et
Y représente un radical monovalent de la formule suivante :

-L-Epoxy

où L représente un groupement de liaison et Epoxy représente un cycle oxirane, et le cycle oxirane est lié au groupement de liaison L avec un ou tous les deux atomes de carbone.

**5.** Composition selon l'une ou plusieurs des revendications 1 à 4, **caractérisée en ce qu**'on fait réagir au moins un composant monovinyl-fonctionnel différent du polysiloxane monovinyl-fonctionnel et du composant époxy-fonctionnel et monovinyl-fonctionnel avec le polysiloxane Si-H-fonctionnel, ce composant présentant la formule (III) suivante :

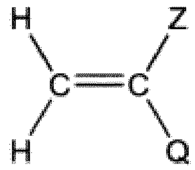

(III)

où Z représente hydrogène ou un radical alkyle avec 1 à 4 atomes de carbone, et Q représente un radical monovalent de la formule suivante :

$-(L')_v-R$

où v=0 ou 1,
L' représente un groupement de liaison, et
R représente un radical $-SiR^x{}_nR^y{}_{3-n}$, dans lequel
n = 1 à 3,
$R^x$ représentent, indépendamment l'un de l'autre, halogène, O-alkyle, ou O-CO-alkyle, et
$R^y$ représente alkyle, ou aryle avec 6 à 10 atomes de carbone ; ou
R représente un radical polymérique avec groupements éther, ester et/ou uréthane.

**6.** Composition selon l'une ou plusieurs des revendications 1 à 5, **caractérisée en ce qu**'au moins un composant polymérique monohydroxy-fonctionnel ayant des groupements éther, ester et/ou uréthane est réagi par réaction de condensation avec le polysiloxane Si-H-fonctionnel, avant d'effectuer la réaction d'addition des composants monovinyl-fonctionnels sur le polysiloxane Si-H-fonctionnel.

**7.** Composition selon une ou plusieurs des revendications 1 à 6, **caractérisée en ce qu'**elle présente la formule générale (IV) suivante :

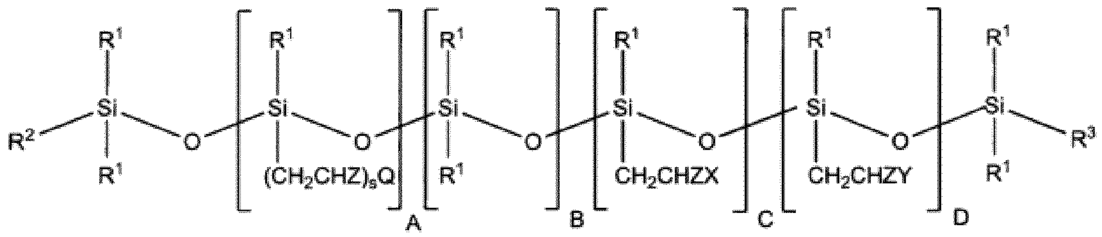

(IV)

où

X, Y, Z et Q sont tels que définis dans les revendications 1 à 6,
s = 0 ou 1 ;
$R^1$ représentent, indépendamment l'un de l'autre, $C_1$-$C_{14}$-alkyle, $C_6$-$C_{10}$-aryle ou $C_7$-$C_{12}$-aralkyle ;
$R^2$ et $R^3$ représentent, indépendamment l'un de l'autre, $CH_2CHZX$, $CH_2CHZY$ ou $(CH_2CHZ)_sQ$, ou -$(R^4)_i$-$C_1C_{14}$-alkyle, -$(R^4)_i$-$C_6$-$C_{14}$-aryle ou -$(R^4)_iC_7$-$C_{14}$-aralkyle, où i = 0 ou 1 et $R^4$ représente O, O-CO, O-CO-O ou -$OSO_2$- ;
A = 0 à 20, B = 2 à 300, C = 0 à 20 et 0 = 0 à 20 ;
où $R^2$ = X et/ou $R^3$ = X, lorsque C = 0, et
$R^2$ = Y et/ou $R^2$ = Y, lorsque D = 0.

**8.** Composition selon une ou plusieurs des revendications 1 à 7, **caractérisée en ce que** la composition comprend des résines époxyde.

**9.** Composition selon l'une quelconque des revendications 1 à 8, **caractérisée en ce que** le(s) polysiloxane(s) sont contenus dans une quantité totale de 0,1 à 10 % en poids par rapport au poids total de la composition.

**10.** Composition durcie, obtenable d'une composition selon l'une quelconque des revendications 1 à 9.

**11.** Composition durcie selon la revendication 10, la composition selon l'une quelconque des revendications 1 à 9 étant un agent de revêtement.

**12.** Composition durcie selon l'une quelconque des revendications 10 ou 11, la surface de celle-ci étant prévue avec des propriétés antiadhésives et/ou antisalissure.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1193303 B1
- US 20130289134 A
- US 5512640 A
- US 6342303 B1
- WO 2009086079 A2
- EP 1985645 A2
- US 20130041098 A1
- DE 102008031901 A1
- DE 102008031901


### In der Beschreibung aufgeführte Nicht-Patentliteratur


- Lackadditive von Johan Bieleman. Wiley-VCH, 1998
- *Iranian Polymer Journal,* 2010, vol. 19 (3), 185-196
- **T. SUZUKI.** *Polymer,* vol. 30 (1989), 333